# EUROPÄISCHE PATENTSCHRIFT

(11) **EP 3 576 864 B1**
(45) Veröffentlichungstag und Bekanntmachung des Hinweises auf die Patenterteilung: **07.06.2023**
(21) Anmeldenummer: 18705830.0
(22) Anmeldetag: 02.02.2018
(51) Int. Cl.: B01D 53/90, B01D 53/50, B01D 53/56, B01D 53/34, B05B 7/04, B01J 4/00, F23J 15/00

(54) **VERFAHREN ZUR ABGASBEHANDLUNG**
METHOD FOR TREATING WASTE GAS
PROCÉDÉ DE TRAITEMENT DES EFFLUENTS GAZEUX

(30) Priorität: 03.02.2017 DE 102017000972; 06.02.2017 DE 102017001025
(43) Veröffentlichungstag der Anmeldung: 11.12.2019
(73) Patentinhaber: RS Rittel GmbH, 45966 Gladbeck (DE)
(72) Erfinder: FRÜHAUF, Peter, 45964 Gladbeck (DE)
(74) Vertreter: Häckel, Stefan
(86) Internationale Anmeldenummer: PCT/EP2018/025028
(87) Internationale Veröffentlichungsnummer: WO 2018/141486

(56) Entgegenhaltungen:
- EP-A1- 2 463 015
- EP-A1- 2 962 743
- WO-A1-2006/119923
- WO-A1-2011/077523
- CN-U- 205 598 951
- DE-A1- 4 130 348
- DE-A1-102008 036 099
- DE-A1-102012 110 962
- DE-C1- 3 935 400
- US-A- 5 484 107
- US-A- 5 676 071

## Beschreibung

Die vorliegende Erfindung betrifft ein Verfahren zur Abgasbehandlung gemäß dem Oberbegriff des Anspruchs 1.

Unter dem Begriff "Düsenlanze" ist bei der vorliegenden Erfindung vorzugsweise eine Vorrichtung zu verstehen, mittels der, insbesondere zur Abgasbehandlung, ein Fluid einem Abgasraum zugeführt werden kann, vorzugsweise wobei das Fluid in den Abgasraum gesprüht oder verdüst wird bzw. als Aerosol oder Spray an den Abgasraum abgegeben wird. Vorzugsweise durchdringt die Düsenlanze hierzu eine Wand des Abgasraums insbesondere horizontal.

Vorzugsweise werden solche Düsenlanzen für die Abgasbehandlung bei größeren Verbrennungsanlagen, insbesondere Großverbrennungsanlagen, eingesetzt.

Eine "Verbrennungsanlage" bzw. "Großverbrennungsanlage" im Sinne der vorliegenden Erfindung ist vorzugsweise eine insbesondere stationäre Anlage zur Verbrennung beliebiger Stoffe in vorzugsweise großem Maßstab, z. B. eine Müllverbrennungsanlage, ein Kraftwerk oder ein Brennofen.

Der Begriff "Abgasbehandlung" bezeichnet bei der vorliegenden Erfindung vorzugsweise die Behandlung bzw. Reinigung von Abgasen insbesondere in Verbrennungsanlagen. Ganz allgemein kann durch eine Abgasbehandlung die (chemische) Zusammensetzung des Abgases verändert oder beeinflusst werden. Insbesondere können dabei chemische Verbindungen durch chemische Reaktionen in andere chemische Verbindungen umgewandelt werden und somit bestimmte chemische Verbindungen (zumindest teilweise) aus dem Abgas entfernt werden.

In Verbrennungsanlagen entstehen bei der Verbrennung Abgase mit einer Vielzahl an, insbesondere giftigen, Schadstoffen, die eine Reinigung des Abgases erforderlich machen. Insbesondere ist die erlaubte Menge von Schadstoffen im Abgas in vielen Ländern gesetzlich geregelt, in der Bundesrepublik Deutschland z. B. durch das Bundes-Immissionsschutzgesetz bzw. die Verordnung zur Durchführung des Bundes-Immissionsschutzgesetzes.

Schadstoffe im Sinne der vorliegenden Erfindung sind insbesondere Stickoxide und/oder Schwefeloxide.

Bei der vorliegenden Erfindung ist unter dem Begriff "Abgasbehandlung" vorzugsweise eine Abgasreinigung zu verstehen, besonders bevorzugt eine Rauchgasentstickung und/oder Rauchgasentschwefelung. Bei der Rauchgasentstickung werden Stickoxide NOₓ, insbesondere NO und/oder NO₂, zumindest teilweise aus dem Abgas oder Rauchgas, das bei der Verbrennung entsteht, entfernt. Bei der Rauchgasentschwefelung werden schwefelhaltige Verbindungen bzw. Schwefeloxide, insbesondere SO₂ und/oder SO₃, zumindest teilweise aus dem Abgas oder Rauchgas, das bei der Verbrennung entsteht, entfernt.

Es ist bekannt, dass das Entfernen von Stickoxiden aus dem Abgas durch eine chemische Reaktion erfolgen kann. Durch Zugabe von Ammoniak (NH₃) bzw. einer Ammoniaklösung, bei der Ammoniak in Wasser gelöst ist, zu dem stickoxidhaltigen Abgas können die Stickoxide aus dem Abgas mit Sauerstoff und der Ammoniaklösung reagieren, so dass als Produkte der Reaktion Stickstoff (N₂) und Wasser (H₂O) entstehen. Es ist auch möglich, zur Entstickung eine Harnstofflösung anstatt einer Ammoniaklösung zu verwenden.

In ähnlicher Weise können Schwefeloxide durch Zugabe von, insbesondere in Wasser gelöstem, Calciumoxid oder Calciumcarbonat aus einem schwefeloxidhaltigen Abgas mittels einer chemischen Reaktion entfernt werden.

Zur Abgasbehandlung bzw. -reinigung wird gemäß der vorliegenden Erfindung ein Wirkfluid - also ein Fluid mit einem Wirkstoff, wie Ammoniak oder Harnstoff oder einer calciumhaltigen Verbindung - in das Abgas eingedüst bzw. verdüst.

Im Folgenden wird die vorliegende Erfindung vorrangig im Zusammenhang mit der Rauchgasentstickung als bevorzugtes Beispiel für die Abgasbehandlung erläutert. Die vorliegende Erfindung ist jedoch in analoger Weise auch zur Rauchgasentschwefelung geeignet.

Der Begriff "Verdüsung" bezeichnet vorzugsweise die Umwandlung eines oder mehrerer Fluide in ein Spray bzw. ein Aerosol. Die Verdüsung erfolgt vorzugsweise durch eine Düse, insbesondere wobei eine Düse ein Bauteil mit einem sich entlang der Strömungsrichtung des Fluids verändernden, insbesondere verringernden, Querschnitt ist.

Die Abgabe des Sprays oder Fluids von der Düsenlanze und/oder in einen Abgasraum wird im Folgenden teilweise auch als "Eindüsung" bezeichnet. Insbesondere sind die Begriffe "Eindüsen" und "Abgeben" bzw. dazu äquivalente Begriffe synonym zueinander und vorzugsweise austauschbar.

Vorzugsweise ist das zu verdüsende Wirkfluid flüssig und erfolgt dessen Verdüsung mittels Druckgas. So wird ein Spray bzw. Aerosol mit einer Vielzahl von Tröpfchen des verdüsten flüssigen Fluids bzw. Wirkfluids gebildet bzw. in das Abgas abgegeben.

Bei bekannten Verbrennungsanlagen wird zur Abgasreinigung bzw. Rauchgasentstickung eine vorgemischte Ammoniaklösung oder andere geeignete Flüssigkeit mittels Düsenlanzen dem Abgas zugeführt.

Die Verbrennungsanlagen weisen einen Tank für die Ammoniaklösung als Wirkfluid sowie einen Tank für ein Zumischfluid, beispielsweise Wasser, auf. Zur Vormischung werden das Wirkfluid und das Zumischfluid in einem gewünschten Verhältnis gemischt, so dass ein Fluidgemisch mit einer bestimmten Konzentration des in dem Wirkfluid enthaltenen Ammoniaks als Wirkstoff entsteht. Dieses Fluidgemisch wird dann über eine gemeinsame Versorgungsleitung den Düsenlanzen zugeleitet. Dies ermöglicht keine optimale Abgasbehandlung, insbesondere hinsichtlich der steigenden Anforderungen bzw. niedrigeren Grenzwerte.

Die DE 10 2008 036 009 A1 offenbart eine Vorrichtung zur Entstickung von Rauchgasen mit Eindüslanzen zum Einblasen von Ammoniak-Wasser oder Harnstoff in einen Innenraum eines Dampferzeugers. Die Eindüslanzen sind in verschiedenen Ebenen angeordnet, und sämtliche Eindüslanzen weisen ein Sperrventil auf. Die Sperrventile sind durch eine zentrale Steuereinheit einzeln steuerbar.

Aus der DE 103 59 150 A1 ist eine Lanze bekannt, in der flüssiger Harnstoff mit einem Trägergas in einer Mischzone gemischt wird, bevor es in einen Abgasstrom dosiert wird.

Die US 2005/0002841 A1 offenbart ein Injektionssystem zur Abgasbehandlung, wobei das System mehrere koaxial angeordnete Leitungen aufweist. Ein zu verdüsendes Wirkfluid wird durch eine der Leitungen geleitet und nach dem Austritt aus der Leitung mit einem durch eine andere Leitung zugeführten Gas verdüst.

Die DE 10 2012 110 962 A1 offenbart eine Mehrstoffdüse für das Eindüsen eines Reaktionsmittels in einen Feuerraum. Die Düse weist drei koaxial zueinander angeordnete Rohre für das Reaktionsmittel, ein Treibmittel und ein Umhüllungsmittel auf. Am Auslass der Düse werden das Reaktionsmittel und das Treibmittel verdüst. Durch die Anordnung der Leitungen soll erreicht werden, dass das verdüste Reaktions- und Treibmittel nach dem Austreten aus der Düse von dem Umhüllungsmittel umhüllt wird.

Die US 5,676,071 betrifft ein Verfahren zur Abgasbehandlung mit einem Behandlungsmedium, das durch eine Vielzahl von Düsen in einen Abgasstrom eingedüst wird. Der Raum, durch den das Abgas fließt, wird (gedanklich) in mehrere Kammern aufgeteilt, wobei jede Kammer eine Düse für das Behandlungsmedium aufweist. In jeder der Kammern wird mittels eines Temperatursensors die Temperatur bestimmt und die Düsen in der Kammer werden nur aktiviert, wenn die Temperatur des Abgases in einem vorbestimmten Temperaturbereich liegt.

Die EP 2 962 743 A1 betrifft ein Verfahren zur Kontrolle von NOx-Emissionen von einem Boiler. Hierzu werden Wirkstoffe wie Ammoniak oder Harnstoff in ein Brenngas des Boilers mittels Düsenlanzen eingedüst. Die Steuerung des eingedüsten Wirkstoffs erfolgt in Abhängigkeit von einer mittels Temperatursensoren gemessenen Temperatur. Hierbei wird bei einer höheren Temperatur ein höherer Massenfluss des Wirkstoffs eingedüst.

Die DE 39 35 400 C1 betrifft ein Verfahren zum Einbringen eines Behandlungsmediums in den Abgasstrom bei Verbrennungsprozessen. Die Fördermenge des Behandlungsmediums wird in Abhängigkeit von der NOx-Konzentration in dem Abgasstrom geregelt.

Die DE 41 30 348 A1 betrifft ein Verfahren zum Eindüsen von Reduktionsmittel in den Rauchgasstrom eines Dampferzeugers. Die Eindüsung erfolgt durch mehrere Düsenlanzen, die jeweils mit einer Temperatur-Messeinrichtung versehen sind. Durch die Temperatur-Messeinrichtungen sind Absperrventile der Lanzen so gesteuert, dass das Reduktionsmittel nur in der optimalen Temperaturzone eingedüst wird. Die Anpassung der eingedüsten Reduktionsmittelmenge erfolgt anhand einer Messung des NO_{X}-Gehalts des Rauchgases.

Der vorliegenden Erfindung liegt die Aufgabe zugrunde, eine optimierte Abgasbehandlung zu ermöglichen.

Die obige Aufgabe wird durch ein Verfahren gemäß Anspruch 1 gelöst. Vorteilhafte Weiterbildungen sind Gegenstand der Unteransprüche.

Eine vorschlagsgemäße Düsenlanze zeichnet sich dadurch aus, dass die Düsenlanze drei Zuleitungen aufweist und/oder in der Düsenlanze dem Wirkfluid das Zumischfluid zumischbar ist.

So ist es insbesondere möglich, die Zumischung lokal bzw. individuell für eine einzelne bzw. jede Düsenlanze einzustellen bzw. anzupassen. Dies ermöglicht entsprechend eine optimierte Abgasbehandlung bzw. Abgasreinigung.

Vorzugsweise ist die Düsenlanze dazu ausgebildet, dass eine Mischung des Wirkfluids mit dem Zumischfluid innerhalb der Düsenlanze und/oder kurz vor der Verdüsung bzw. Eindüsung des Fluidgemischs aus Wirkfluid und Zumischfluid erfolgt. Insbesondere ist durch ein Mischen unmittelbar vor der Verdüsung eine sehr geringe Totzeit zur Anpassung des Mischungsverhältnisses aus Zumischfluid und Wirkfluid an eine Veränderung der Bedingungen im Abgasraum, beispielsweise eine veränderte Temperatur und/oder Schadsoffkonzentration, ermöglicht.

Eine vorschlagsgemäße Verbrennungsanlage, insbesondere Großverbrennungsanlage, weist mehrere einem gemeinsamen Abgasraum zugeordnete Düsenlanzen zur Verdüsung eines Wirkfluids mittels Druckgas für die Abgasbehandlung auf. Insbesondere verdüsen die Düsenlanzen das Wirkfluid bei Betrieb der Verbrennungsanlage in einen gemeinsamen Abgasraum.

Weiter weist die vorschlagsgemäße Verbrennungsanlage fluidisch getrennte Versorgungsleitungen für das Zumischfluid und das Wirkfluid auf, insbesondere wobei das Zumischfluid dem Wirkfluid jeweils unmittelbar vor oder in der Düsenlanze zumischbar ist. So ist es insbesondere möglich, die Zumischung lokal bzw. individuell für eine einzelne bzw. jede Düsenlanze einzustellen bzw. anzupassen. Dies ermöglicht entsprechend eine optimierte Abgasbehandlung bzw. Abgasreinigung.

Alternativ oder zusätzlich weist die vorschlagsgemäße Verbrennungsanlage ein Steuerungssystem auf, mit dem Zuflüsse des Wirkfluids, Zumischfluids und/oder Druckgases für einzelne Düsenlanzen und/oder Düsenlanzengruppen (also mehrere Düsenlanzen) unabhängig von anderen Düsenlanzen einstellbar sind. So ist es insbesondere möglich, die Zumischung lokal bzw. individuell für eine einzelne bzw. jede Düsenlanze einzustellen bzw. anzupassen. Dies ermöglicht entsprechend eine optimierte Abgasbehandlung bzw. Abgasreinigung.

Gemäß einem weiteren Aspekt, der jedoch keinen Teil der beanspruchten Erfindung bildet, betrifft die vorliegende Offenbarung eine Verbrennungsanlage mit einem Abgasraum und mehreren Düsen oder Düsenlanzen zur Eindüsung eines Fluids mittels Druckgas für die Abgasbehandlung. Die Verbrennungsanlage weist ein Steuerungssystem zur Steuerung der Abgasbehandlung und (mindestens) ein Thermometer zur Messung einer Temperatur in dem Abgasraum auf. Das Steuerungssystem ist vorzugsweise dazu ausgebildet, die Abgasbehandlung bzw. die Eindüsung oder Mischung des Fluids in Abhängigkeit von der von dem Thermometer gemessenen Temperatur zu steuern. Auf diese Weise ist eine besonders effiziente und effektive Abgasbehandlung bzw. Abgasreinigung ermöglicht.

Insbesondere ist die Verbrennungsanlage bzw. das Steuerungssystem dazu ausgebildet, auf Grundlage oder in Abhängigkeit oder auf Grundlage der, insbesondere von dem Thermometer gemessenen, Temperatur die Menge und/oder Konzentration des Wirkfluids und/oder des Wirkstoffs einzustellen oder zu steuern. Insbesondere sind die Verbrennungsanlage und/oder das Steuerungssystem dazu ausgebildet, das Mischungsverhältnis zwischen Wirkfluid und Zumischfluid und/oder die Konzentration oder (Absolut-)Menge des Wirkstoffs in dem verdüsten Fluidgemisch in Abhängigkeit der gemessenen Temperatur einzustellen, zu steuern oder zu regeln.

Gemäß einem bevorzugten Aspekt weist die Verbrennungsanlage mehrere Thermometer auf und/oder ist die Verbrennungsanlage dazu ausgebildet, die Temperatur in verschiedenen Bereichen, wie Sektoren und/oder Ebenen, des Abgasraums, insbesondere unabhängig voneinander, zu messen. Dies ermöglicht eine besonders genaue Abstimmung des eingedüsten Fluids auf die in dem Abgasraum herrschenden Bedingungen, insbesondere wenn die Menge und/oder Konzentration des durch das Fluid eingebrachten Wirkstoffs unabhängig in den Bereichen entsprechend gesteuert bzw. eingestellt wird, so dass eine besonders effektive und effiziente Abgasreinigung ermöglicht ist.

Die Verbrennungsanlage ist vorzugsweise dazu ausgebildet, die Menge oder Konzentration des Wirkstoffs in dem verdüsten bzw. in den Abgasraum abgegebenen Fluid oder Fluidgemisch in weniger als einer Sekunde, vorzugsweise weniger als 0,1 s, besonders bevorzugt weniger als 0,01 s, also mit einer sehr kurzen Totzeit, nach der Messung der Temperatur zu verändern oder anzupassen. Es kann somit eine besonders schnelle Anpassung und damit eine sehr effiziente und effektive Abgasreinigung erfolgen.

Bei einem vorschlagsgemäßen Verfahren zur Abgasbehandlung in einer Verbrennungsanlage werden den Düsenlanzen das Wirkfluid und das Zumischfluid getrennt zugeführt, wobei das Zumischfluid dem Wirkfluid in oder unmittelbar vor den Düsenlanzen zugemischt wird. So ist es insbesondere möglich, die Zumischung lokal bzw. individuell für eine einzelne bzw. jede Düsenlanze einzustellen bzw. anzupassen. Dies ermöglicht entsprechend eine optimierte Abgasbehandlung bzw. Abgasreinigung.

Alternativ oder zusätzlich werden bei einem vorschlagsgemäßen Verfahren die Zuflüsse des Zumischfluids, Wirkfluids und/oder Druckgases für einzelne oder mehrere Düsenlanzen unabhängig von anderen Düsenlanzen eingestellt. So ist es insbesondere möglich, die Zumischung lokal bzw. individuell für eine einzelne bzw. jede Düsenlanze einzustellen bzw. anzupassen. Dies ermöglicht entsprechend eine optimierte Abgasbehandlung bzw. Abgasreinigung.

Die vorliegende Erfindung betrifft ein Verfahren zur Rauchgasentstickung in einer Verbrennungsanlage, wobei ein Fluidgemisch aus einem Zumischfluid (6) und einem Wirkfluid (5) mit einem Wirkstoff, der Ammoniak oder Harnstoff ist oder enthält, mittels Druckgas durch mehrere Düsen oder Düsenlanzen in einen gemeinsamen Abgasraum der Verbrennungsanlage eingedüst wird. Bei diesem Verfahren wird eine Temperatur in dem Abgasraum gemessen und eine Menge oder Konzentration des Wirkstoffs in dem verdüsten Fluidgemisch in Abhängigkeit von der gemessenen Temperatur eingestellt oder gesteuert. Dies ermöglicht eine optimierte Abgasbehandlung.

Weiter wird erfindungsgemäß die Menge oder Konzentration des Wirkstoffs in einem ersten Temperaturbereich zwischen etwa 800 °C und etwa 980 °C. So kann insbesondere das Eindüsen von überschüssigem Wirkstoff und somit eine Verschmutzung der Verbrennungsanlage bzw. des Abgasraums vermieden werden.

Zusätzlich wird erfindungsgemäß bei steigender Temperatur die Menge oder Konzentration des Wirkstoffs in einem zweiten Temperaturbereichzwischen etwa 980 °C und etwa 1.040 °C zumindest im Wesentlichen konstant gehalten. Dies ermöglicht eine optimierte Abgasbehandlung.

Vorzugsweise wird bei Erreichen oder Überschreiten einer Grenztemperatur die Menge oder Konzentration des eingedüsten Wirkstoffs reduziert oder kein Wirkstoff eingedüst. Die Grenztemperatur beträgt mindestens etwa 1.040 °C. So kann verhindert werden, dass Wirkstoff verbrennt bzw. oxidiert und zu einem erhöhten Schadstoffausstoß der Verbrennungsanlage statt zu einer Reduktion des Schadstoffausstoßes führt.

Generell ist es vorteilhaft, wenn die Gesamtmenge der den Düsen oder Düsenlanzen zugeführten Fluide bzw. der Volumenstrom des verdüsten Fluids oder Fluidgemischs zumindest im Wesentlichen konstant gehalten wird. Vorzugsweise ist die Gesamtmenge der den Düsen oder Düsenlanzen zugeführten Fluide bzw. der Volumenstrom des verdüsten Fluids oder Fluidgemischs unabhängig von der gemessenen Temperatur und/oder unabhängig von dem Mischungsverhältnis zwischen Zumischfluid und Wirkfluid bzw. unabhängig von der Menge oder Konzentration des Wirkstoffs. Dies ist einer optimierten Abgasbehandlung zuträglich.

Die oben genannten Merkmale der vorliegenden Erfindung sowie die sich aus den Ansprüchen und der nachfolgenden Beschreibung ergebenen Aspekte und Merkmale der vorliegenden Erfindung können grundsätzlich unabhängig voneinander, aber auch in beliebiger Kombination realisiert werden.

Weitere Aspekte, Vorteile, Merkmale und Eigenschaften der vorliegenden Erfindung ergeben sich aus den Ansprüchen und der nachfolgenden Beschreibung bevorzugter Ausführungsformen anhand der Zeichnung. Es zeigt:
- Fig. 1: eine schematische Darstellung einer vorschlagsgemäßen Verbrennungsanlage;
- Fig. 2: einen schematischen Schnitt durch einen Abgasraum der Verbrennungsanlage in einer Ebene mit Düsenlanzen;
- Fig. 3: einen schematischen Schnitt einer vorschlagsgemäßen Düsenlanze gemäß einer ersten Ausführungsform;
- Fig. 4: einen schematischen Schnitt einer vorschlagsgemäßen Düsenlanze gemäß einer zweiten Ausführungsform;
- Fig.5: einen weiteren schematischen Schnitt durch den Abgasraum einer vorschlagsgemäßen Verbrennungsanlage; und
- Fig. 6: eine schematische Darstellung der Abhängigkeit der Konzentration eines Wirkstoffs von einer gemessenen Temperatur.

In den teilweise nicht maßstabsgerechten, nur schematischen Figuren werden für gleiche oder gleichartige Bauteile und Komponenten dieselben Bezugszeichen verwendet, wobei entsprechende oder vergleichbare Eigenschaften und Vorteile erreicht werden können, auch wenn von einer wiederholten Beschreibung abgesehen wird.

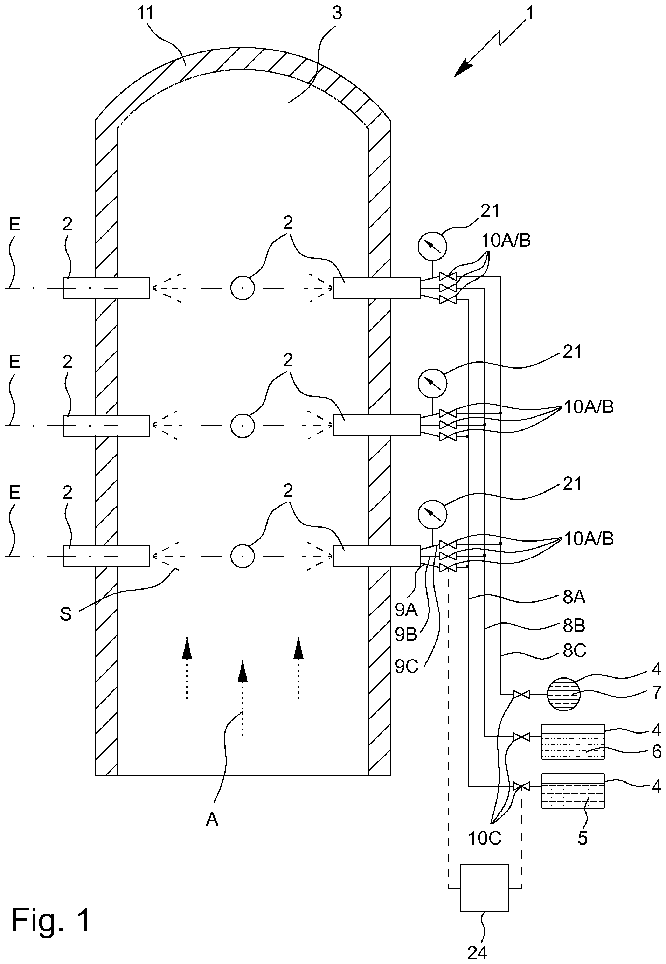

Fig. 1 zeigt eine vorschlagsgemäße Verbrennungsanlage 1 mit mehreren vorschlagsgemäßen Düsenlanzen 2. Die Verbrennungsanlage 1 ist vorzugsweise eine Großverbrennungsanlage. Die Düsenlanzen 2 sind einem vorzugsweise gemeinsamen Abgasraum 3 der Verbrennungsanlage 1 zugeordnet.

Die Verbrennungsanlage 1 kann auch mehrere, insbesondere baulich getrennte, Abgasräume 3 aufweisen.

Vorzugsweise weist die Verbrennungsanlage 1 bzw. der Abgasraum 3 oder jeder Abgasraum 3 einen (nicht dargestellten) Schornstein auf. Der Schornstein bildet vorzugsweise einen Teil, Abschnitt oder Bereich des Abgasraums 3.

Vorzugsweise sind die Düsenlanzen 2 in verschiedenen, insbesondere horizontalen, Ebenen E des sich insbesondere vertikal erstreckenden bzw. gemeinsamen Abgasraums 3 angeordnet.

Bevorzugt bilden die in einer gemeinsamen Ebene E angeordneten Düsenlanzen 2 eine Düsenlanzengruppe bzw. weist jede Etage bzw. Ebene E eine Düsenlanzengruppe auf.

Jede Ebene E bzw. Düsenlanzengruppe weist vorzugsweise mehr als zwei oder drei und/oder weniger als zehn oder acht Düsenlanzen 2 auf. Grundsätzlich kann jede Ebene E eine beliebige Anzahl an Düsenlanzen 2, also auch mehr als zehn Düsenlanzen 2, aufweisen. Es ist auch möglich, dass verschiedene Ebenen E bzw. Düsenlanzengruppen unterschiedlich viele Düsenlanzen 2 aufweisen.

Vorzugsweise weist die Verbrennungsanlage 1 mehrere Tanks 4 oder sonstige Versorgungseinrichtungen für ein Wirkfluid 5, ein Zumischfluid 6 und ein Druckgas 7 auf. Es kann auch jedem Abgasraum 3 eine Gruppe von Tanks 4 zugeordnet sein.

Vorzugsweise ist das Wirkfluid 5 eine Flüssigkeit, insbesondere eine Ammoniaklösung, Harnstofflösung oder sonstige Flüssigkeit.

Besonders bevorzugt weist das Wirkfluid 5 einen Wirkstoff, wie Ammoniak, Harnstoff o. dgl. auf, der insbesondere zur Behandlung oder Reinigung von Abgas A geeignet bzw. vorgesehen ist.

Vorzugsweise ist das Zumischfluid 6 eine Flüssigkeit, insbesondere Wasser. Das Zumischfluid 6 wird dem Wirkfluid 5 bedarfsweise zugemischt.

Vorzugsweise wird als Druckgas 7 Druckluft oder Dampf bzw. Wasserdampf eingesetzt.

Vorzugsweise weist die Verbrennungsanlage 1 einen oder mehrere Kompressoren zur Erzeugung des Druckgases 7 bzw. der Druckluft auf (ebenfalls in den Figuren nicht dargestellt).

Die Verbrennungsanlage 1 weist vorzugsweise separate Versorgungsleitungen 8 auf, um die Düsenlanzen 2 bzw. Gruppen von Düsenlanzen mit dem Wirkfluid 5, dem Zumischfluid 6 und dem Druckgas 7 zu versorgen, insbesondere um die Tanks 4 fluidisch mit den Düsenlanzen 2 verbinden.

Insbesondere weist die Verbrennungsanlage 1 eine Versorgungsleitung 8A für das Wirkfluid 5, eine Versorgungsleitung 8B für das Zumischfluid 6 und eine Versorgungsleitung 8C für das Druckgas 7 auf. Es können auch weitere Versorgungsleitungen vorgesehen sein.

Vorzugsweise ist jede der Versorgungsleitungen 8A, 8B, 8C eine Versorgungsleitung 8.

Die Verbrennungsanlage 1 weist vorzugsweise eine oder mehrere (in den Figuren nicht dargestellte) Pumpen auf, mit denen das Wirkfluid 5 und/oder das Zumischfluid 6 von den Tanks 4 oder sonstigen Versorgungseinrichtungen durch die Versorgungsleitungen 8 zu den Düsenlanzen 2 gepumpt werden können.

Vorzugsweise ist jede Düsenlanze 2 oder Düsenlanzengruppe über die drei Versorgungsleitungen 8A, 8B und 8C und/oder Zuleitungen 9, insbesondere entsprechend getrennte Zuleitungen 9A, 9B und 9C, mit dem Wirkfluid 5, Zumischfluid 6 und Druckgas 7 versorgbar.

Vorzugsweise ist jede der Zuleitungen 9A, 9B, 9C eine Zuleitung 9.

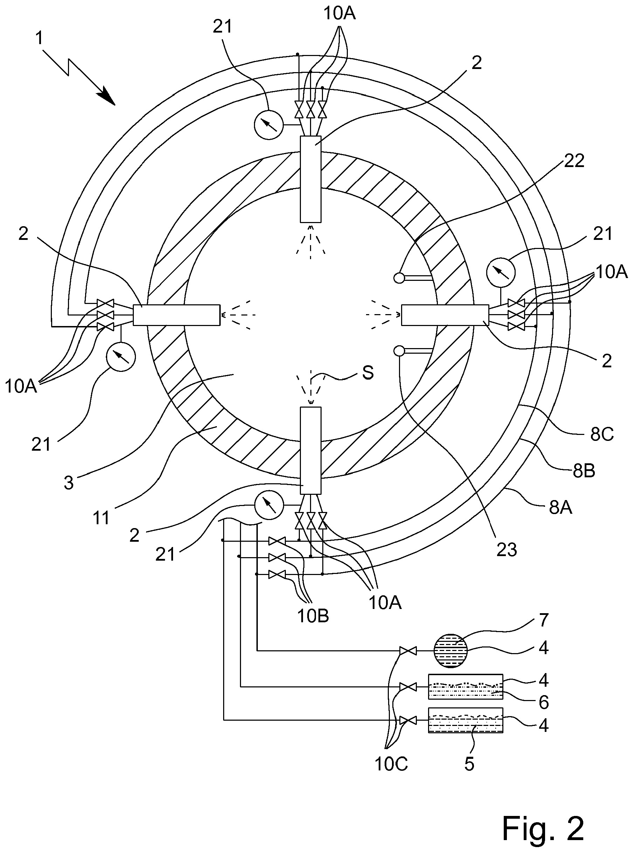

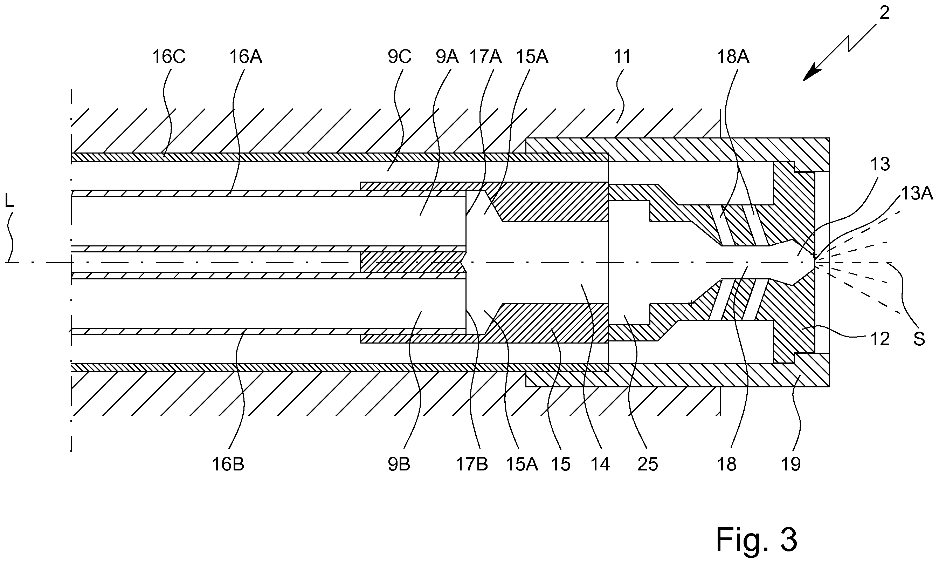

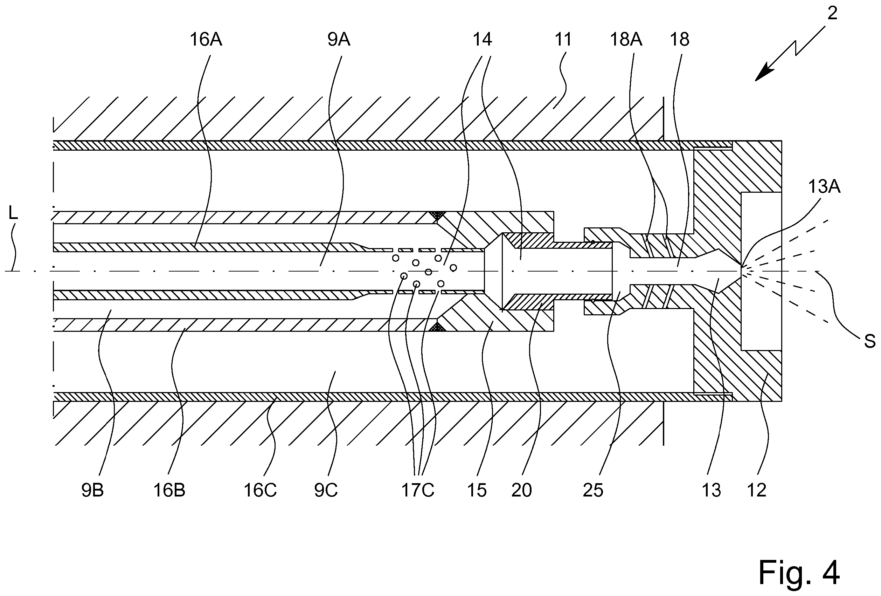

Besonders bevorzugt weist jede Düsenlanze 2 oder Düsenlanzengruppe getrennte Zuleitungen 9A, 9B und 9C zur Zuführung von bzw. Versorgung mit dem Wirkfluid 5, Zumischfluid 6 und Druckgas 7 auf. Die Zuleitungen 9 sind in Fig. 1 und 2 nur angedeutet und deutlicher in Fig. 3 und 4 dargestellt, die später erläutert werden.

Vorzugsweise sind die Zuflüsse von Wirkfluid 5, Zumischfluid 6 und/oder Druckgas 7 zu den einzelnen Düsenlanzen 2 bzw. Düsenlanzengruppen mittels entsprechender Ventile 10 einstellbar bzw. steuerbar, anpassbar, dosierbar oder regelbar. Nachfolgend wird zur Vereinfachung der Begriff "einstellbar" verwendet, auch wenn hierdurch insbesondere nur eine einmalige Einstellung oder Anpassung umfasst sein kann, wobei hierdurch insbesondere aber auch ein (fortlaufendes) Steuern und ggf. Regeln umfasst sein soll.

Die Ventile 10 sind den Versorgungsleitungen 8 zugeordnet, insbesondere um die individuelle Einstellbarkeit zu ermöglichen. Vorzugsweise weist jede Versorgungsleitung 8 bzw. Zuleitung 9 ein Ventil 10 auf.

Insbesondere ist zumindest jeder Versorgungsleitung 8A und 8B bzw. Zuleitung 9A und 9B für das Wirkfluid 5 und Zumischfluid 6 und/oder jeder Düsenlanze 2 oder zumindest jeder Düsenlanzengruppe jeweils ein unabhängig einstellbares bzw. steuerbares oder regelbares Ventil 10 zugeordnet. Gleiches gilt vorzugsweise auch für die dritte Versorgungsleitung 8C bzw. Zuleitung 9C für das Druckgas 7, wie in Fig. 1 schematisch angedeutet.

Fig. 2 zeigt in einem schematischen horizontalen Schnitt den Abgasraum 3 in einer Etage bzw. Ebene E mit mehreren Düsenlanzen 2, also mit einer Düsenlanzengruppe. In Fig. 2 ist die bevorzugte Versorgung der Düsenlanze 2 bzw. Düsenlanzengruppe über die Versorgungsleitungen 8 mit dem Wirkfluid 5, Zumischfluid 6 und Druckgas 7 ebenfalls angedeutet.

Die Verbrennungsanlage 1 weist vorzugsweise erste Ventile 10A und/oder zweite Ventile 10B sowie optionale dritte Ventile 10C auf.

Vorzugsweise ist jedes der Ventile 10A, 10B, 10C ein Ventil 10.

Die ersten Ventile 10A sind vorzugsweise jeweils einer Düsenlanze 2 zugeordnet. Die ersten Ventile 10A sind vorzugsweise in, an oder unmittelbar stromauf der jeweiligen Düsenlanze 2 angeordnet.

Bezogen auf eine zugeordnete Düsenlanze 2 ist vorzugsweise ein erstes Ventil 10A in der entsprechenden Versorgungsleitung 8A bzw. Zuleitung 9A bzw. an deren Übergang und ein weiteres erstes Ventil 10A in der Versorgungsleitung 8B bzw. Zuleitung 9B bzw. deren Übergang sowie optional ein zusätzliches erstes Ventil 10A (insbesondere in Form eines Druckreglers oder Reduzierventils) in der Versorgungsleitung 8C bzw. Zuleitung 9C bzw. deren Übergang angeordnet.

Vorzugsweise sind durch die Ventile 10A die Zuflüsse der Fluide 5, 6 und/oder des Druckgases 7 für einzelne Düsenlanze 2 und/oder Düsenlanzengruppen, besonders bevorzugt unabhängig von anderen Düsenlanzen 2, einstellbar bzw. dosierbar.

Die Ventile 10A können in oder unmittelbar vor der Düsenlanze 2 angeordnet sein. Insbesondere sind die Ventile 10A weniger als 50 cm oder 100 cm von der Düsenlanze 2 entfernt angeordnet.

Auf diese Weise wird eine genaue Bestimmung, insbesondere Messung und/oder Steuerung, des Zuflusses bzw. der Zuflussmengen des Wirkfluids 5, des Zumischfluids 6 und/oder des Druckgases 7 zu der Düsenlanze 2 ermöglicht.

Die alternativ oder zusätzlich vorgesehenen zweiten Ventile 10B sind vorzugsweise den verschiedenen Etagen bzw. Ebenen E bzw. Düsenlanzengruppen oder diesbezüglichen Versorgungsringen zugeordnet.

Bezogen auf eine zugeordnete Ebene E bzw. Düsenlanzengruppe ist vorzugsweise ein zweites Ventil 10B in der entsprechenden Versorgungsleitung 8A bzw. Zuleitung 9A bzw. an deren Übergang und ein weiteres zweites Ventil 10B in der Versorgungsleitung 8B bzw. Zuleitung 9B bzw. deren Übergang sowie optional ein zusätzliches zweites Ventil 10B (insbesondere in Form eines Druckreglers oder Reduzierventils) in der Versorgungsleitung 8C bzw. Zuleitung 9C bzw. deren Übergang angeordnet.

Vorzugsweise sind durch die Ventile 10B die Zuflüsse der Fluide 5, 6 und/oder des Druckgases 7 für jede Ebene E bzw. Düsenlanzengruppe separat bzw. einzeln, also insbesondere ebenenweise bzw. gruppenweise, einstellbar bzw. dosierbar.

Die dritten Ventile 10C sind optional vorgesehen und vorzugsweise stromauf von Steigleitungen bzw. unmittelbar nach den oder in der Nähe der Tanks 4 angeordnet.

Die Ventile 10 sind vorzugsweise elektronisch oder auf sonstige Weise einstellbar, steuerbar oder regelbar.

Die den ersten und zweiten Versorgungsleitungen 8A und 8B bzw. Zuleitungen 9A und 9B zugeordneten Ventile 10 sind vorzugsweise als Kugelventile bzw. Kugelregelventile ausgeführt. Zusätzlich oder alternativ kann es sich auch um Rückschlagventile bzw. Ventile mit Rückschlagfunktion handeln.

Die den dritten Versorgungsleitungen 8C bzw. Zuleitungen 9C für das Druckgas 7 zugeordneten Ventile 10 sind vorzugsweise als Druckminderer und/oder Druckregelventile zur Einstellung, Steuerung oder Regelung des Drucks des Druckgases 7 ausgeführt.

Die anderen Ventile 10 sind vorzugsweise zur Einstellung, Steuerung oder Regelung bzw. Drosselung des Fluidstroms, besonders bevorzugt der Flüssigkeitsströme bzw. des Volumenstroms oder Massenstroms, ausgebildet. Dementsprechend kann der Volumenstrom oder Massenstrom des Wirkfluids 5 und Zumischfluids 6, der den einzelnen Düsenlanzen 2 bzw. Düsenlanzengruppen zugeführt wird, vorschlagsgemäß individuell eingestellt, gesteuert oder geregelt werden.

Durch die Ventile 10 können Zuflüsse und/oder Drücke, insbesondere des Wirkfluids 5, des Zumischfluids 6 und/oder des Druckgases 7, optimal für die Abgasreinigung angepasst werden. Auf diese Weise kann eine besonders effiziente und/oder wirkstoffsparende und somit kostengünstige Abgasreinigung erreicht werden. Insbesondere wird so eine Verschwendung von Wirkstoff durch Zugabe von unnötig hohen Wirkstoffmengen verhindert.

Insbesondere können verschiedene Ventile 10 der Verbrennungsanlage 1 unterschiedlich ausgebildet sein.

Der Abgasraum 3 wird vorzugsweise von einer Wand 11 begrenzt und/oder befindet sich innenseitig der Wand 11.

Der Abgasraum 3 bzw. die Wand 11 kann, wie in Fig. 2 dargestellt, in der Ebene E einen runden, insbesondere kreisförmigen oder elliptischen, Querschnitt aufweisen. Hier ist jedoch auch eine beliebige andere Form, insbesondere ein quadratischer, rechteckiger oder sonstiger polygonaler Querschnitt, möglich.

Vorzugsweise ist die Wand 11 wärmedämmend ausgebildet, besonders bevorzugt so dass bei Betrieb der Verbrennungsanlage 1 die Temperatur auf der Außenseite der Wand 11 deutlich geringer ist als auf der Innenseite der Wand 11 bzw. im Abgasraum 3. Insbesondere kann die Temperatur T im Abgasraum 3 mehrere 100 °C bis über 1000 °C betragen und/oder beträgt die Temperatur auf der Außenseite der Wand 11 bzw. außerhalb des Abgasraums 3 vorzugsweise weniger als 50 °C oder 30 °C.

Es können auch die Düsenlanzen 2 mit Wärmedämmung versehen sein, insbesondere so dass die Temperatur in der Düsenlanze 2 weniger als 50 °C oder 30 °C beträgt.

Vorzugsweise sind die Düsenlanzen 2 zumindest im Wesentlichen in bzw. innerhalb der Wand 11 angeordnet und/oder ragen die Düsenlanzen 2 in den Abgasraum 3 hinein.

Vorzugsweise verlaufen die Düsenlanzen 2 schräg oder quer, besonders bevorzugt zumindest im Wesentlichen rechtwinklig, zu der Wand 11. Es kann, abweichend von der Darstellung in den Figuren, jedoch auch besonders bevorzugt sein, die Düsenlanzen 2 nicht in einem rechten Winkel, sondern "tangentialer" bzw. in einem spitzen Winkel zu der Wand 11 oder parallel zu der Wand 11 anzuordnen. Alternativ oder zusätzlich können die Düsenlanzen 2 waagerecht oder geneigt zur Horizontalen ausgerichtet sein, insbesondere so dass die Düsen 13 der Düsenlanzen 2 schräg nach oben oder unten weisen.

Insbesondere ist die Düsenlanze 2 länglich und/oder rohrartig ausgebildet. Die Düsenlanze 2 weist vorzugsweise eine Symmetrieachse oder Längsachse L auf.

Vorzugsweise weist die Düsenlanze 2 einen Düsenkopf 12 auf. Der Düsenkopf 12 ist vorzugsweise an einem axialen bzw. in den Abgasraum 3 ragenden Ende der Düsenlanze 2 angeordnet.

Der Düsenkopf 12 ist vorzugsweise gerade an der Düsenlanze 2 angeordnet, kann aber auch schräg oder quer, insbesondere rechtwinklig zur Düsenlanze 2 angeordnet sein.

Der Düsenkopf 12 weist mindestens eine Düse 13 bzw. Düsenöffnung 13A (in Fig. 3 und 4 gezeigt) auf, um im Betrieb aus dem Wirkfluid 5 mit optional zugemischtem Zumischfluid 6 ein Aerosol bzw. Spray S zu erzeugen bzw. abzugeben, wie schematisch angedeutet.

Vorzugsweise verläuft die Hauptsprührichtung der Düse 13 gerade bzw. in der Längsachse L oder schräg dazu.

Insbesondere kann die Düsenlanze 2 bzw. der Düsenkopf 12 aus der Wand 11 hervorragen und/oder in den Abgasraum 3 hineinragen.

Die Länge der Düsenlanze 2 beträgt vorzugsweise mehr als 30 cm oder 40 cm, besonders bevorzugt 60 cm oder mehr, und/oder weniger als 140 cm oder 120 cm, besonders bevorzugt weniger als 100 cm oder 80 cm.

Die Länge des in den Abgasraum 3 hineinragenden bzw. aus der Wand 11 herausragenden Abschnitts der Düsenlanze 2 und/oder des Düsenkopfs 12 entlang der Längsachse L beträgt vorzugsweise mehr als 10 cm oder 20 cm und/oder weniger als 40 cm oder 30 cm. Es ist jedoch auch möglich, dass die Düsenlanze 2 bzw. der Düsenkopf 12 nur weniger als 10 cm oder gar nicht aus der Wand 11 herausragt bzw. die Länge des aus der Wand 11 herausragenden Abschnitts weniger als 10 cm oder 0 cm beträgt.

Die Düsenlanzen 2 - insbesondere einer Gruppe bzw. Ebene E - können an verschiedenen, insbesondere einander gegenüberliegenden, Seiten des Abgasraums 3 angeordnet sein. Insbesondere kann so die von den Düsenlanzen 2 besprühte (Querschnitts-)Fläche möglichst groß sein und/oder möglichst homogen besprüht werden.

Fig. 3 zeigt einen Schnitt der vorschlagsgemäßen Düsenlanze 2 entlang der Längsachse L gemäß einer ersten Ausführungsform.

Vorzugsweise ist die Düsenlanze 2 zur Verdüsung des Wirkfluids 5 und optional zugemischten Zumischfluid 6 mittels Druckgas 7 ausgebildet. In Fig. 3 sind die Fluide 5, 6 und das Druckgas 7 nicht dargestellt, wobei aber das erzeugte Aerosol bzw. Spray S angedeutet ist.

Insbesondere dient die Düsenlanze 2 der Abgasbehandlung, ganz besonders bevorzugt Abgasreinigung und/oder Rauchgasentstickung oder Rauchgasentschwefelung, insbesondere in Verbrennungsanlagen 1.

Vorzugsweise weist die Düsenlanze 2 die drei Zuleitungen 9 auf, insbesondere also die Zuleitung 9A für das Wirkfluid 5, die Zuleitung 9B für das Zumischfluid 6 und die Zuleitung 9C für das Druckgas 7.

Vorzugsweise verlaufen die Zuleitungen 9 entlang und/oder parallel zu der Längsachse L in der Düsenlanze 2.

Die Zuleitungen 9, insbesondere die Zuleitungen 9A, 9B, können nebeneinander, insbesondere parallel und/oder von der Längsachse L beabstandet, und/oder koaxial zueinander angeordnet sein bzw. verlaufen.

Die Düsenlanze 2 ist vorzugsweise derart ausgebildet, dass dem Wirkfluid 5 in der Düsenlanze 2 das Zumischfluid 6 zumischbar ist.

Die Zuleitung 9A und/oder die Zuleitung 9B verlaufen vorzugsweise innerhalb der Druckgaszuleitung 9C, insbesondere so dass die Zuleitungen 9A, 9B innere Zuleitungen 9 sind und/oder die Druckgaszuleitung 9C eine äußere Zuleitung 9 ist. Die Druckgaszuleitung 9C umgibt also vorzugsweise die weiteren Zuleitungen 9.

Es ist auch möglich, dass die Düsenlanze 2 eine Außenleitung oder ein Außenrohr aufweist, welches die Zuleitungen 9, insbesondere die Druckgaszuleitung 9C, umgibt oder bildet. Insbesondere kann die Außenleitung dazu ausgebildet sein, die Düsenlanze 2 bzw. innerhalb der Außenleitung angeordnete Teile der Düsenlanze 2 vor Beschädigungen, z. B. durch mechanische Einwirkungen, Hitzeeinwirkung und/oder Fluideintritt, zu schützen.

Die Außenleitung kann auch als Führung für die Düsenlanze 2 ausgebildet sein.

Vorzugsweise weist die Düsenlanze 2 einen Zumischbereich 14 auf. Vorzugsweise ist der Zumischbereich 14 mittig bzw. zentral im Zumischteil 15 und/oder zur Längsachse L angeordnet.

Der Zumischbereich 14 ist vorzugsweise durch einen insbesondere vollständig innerhalb der Düsenlanze 2 gebildeten oder angeordneten Raum oder Bereich gebildet.

Vorzugsweise münden die erste Zuleitung 9A und die zweite Zuleitung 9B in den Zumischbereich 14 oder enden die erste Zuleitung 9A und die zweite Zuleitung 9B in dem Zumischbereich 14. Bevorzugt ist der Zumischbereich 14 stromab bzw. an einem auslassseitigen Ende der Zuleitung(en) 9A und/oder 9B angeordnet oder gebildet.

Vorzugsweise weist der Zumischbereich 14 einen größeren (Strömungs-)Querschnitt als die erste Zuleitung 9A und/oder die zweite Zuleitung 9B auf.

Vorzugsweise sind die erste Zuleitung 9A und die zweite Zuleitung 9B in dem bzw. durch den Zumischbereich 14 fluidisch miteinander verbunden. Vorzugsweise ist die dritte Zuleitung 9C nicht unmittelbar mit dem Zumischbereich 14 verbunden.

Vorzugsweise dient der Zumischbereich 14 dem optionalen Zumischen des Zumischfluids 6 zu dem Wirkfluid 5. Insbesondere ist ein (flüssiges) Fluidgemisch aus dem Wirkfluid 5 und Zumischfluid 6 in dem Zumischbereich 14 erzeugbar oder herstellbar.

Vorzugsweise weist das Fluidgemisch also das Wirkfluid 5 und/oder das Zumischfluid 6 auf.

Vorzugsweise ist der Zumischbereich 14 stromauf des Düsenkopfes 12 und/oder der Düse 13 und/oder eines Verdüsungsbereichs 18, insbesondere kurz oder unmittelbar davor, angeordnet oder gebildet.

Vorzugsweise ist der Zumischbereich 14 von dem Lanzenende bzw. der Düse 13 oder Düsenöffnung 13A beabstandet und/oder vollständig innerhalb der Düsenlanze 2 angeordnet.

Vorzugsweise beträgt der Abstand zwischen dem Zumischbereich 14 und der Düse 13 und/oder Düsenöffnung 13A der Düsenlanze 2 höchstens einige Zentimeter. Besonders bevorzugt ist der Abstand zwischen dem Zumischbereich 14 und der der Düse 13 bzw. Düsenöffnung 13A jedoch möglichst klein, beispielsweise etwa 1 cm.

In dem Zumischbereich 14 werden das Wirkfluid 5 und das Zumischfluid 6 vorzugsweise durch Verwirbeln und/oder Zusammenführen zu einem Strom miteinander gemischt, wobei optional ein statischer Mischer eingesetzt werden oder gebildet sein kann. Alternativ wird das Zumischfluid 6 dem Wirkfluid 5 oder umgekehrt vorzugsweise radial zugemischt. Vorzugsweise erfolgt in dem Zumischbereich 14 keine Verdüsung oder Zerstäubung des (flüssigen) Fluidgemischs aus dem Wirkfluid 5 und dem Zumischfluid 6.

Besonders bevorzugt kann durch das Zumischen die Konzentration des Wirkstoffs in dem Fluidgemisch eingestellt oder verändert, insbesondere verringert, werden.

Es ist jedoch auch möglich, dass dem Wirkfluid 5 bei Betrieb der Düsenlanze 2 kein Zumischfluid 6 zugemischt wird. Dies kann z. B. vorteilhaft sein, wenn der zur Abgasbehandlung benötigte Zufluss des Wirkstoffs zum Abgasraum 3 durch alleiniges Abgeben bzw. Versprühen oder Verdüsen des Wirkfluids 5 in den Abgasraum 3 realisiert werden kann oder soll. Dies ist dann der Fall, wenn die zur Abgasbehandlung maximal mögliche Konzentration des Wirkstoffs, nämlich die Konzentration des Wirkstoffs in dem Wirkfluid 5, eingesetzt wird.

Alternativ oder zusätzlich ist es möglich, dass die Düsenlanze 2 nur mit Zumischfluid 6 betrieben wird, ohne dass Wirkfluid 5 oder der Wirkstoff in den Abgasraum 3 versprüht bzw. verdüst wird. Dies ermöglicht insbesondere eine Feuchteanreicherung und/oder Kühlung des Abgases A bzw. Rauchgases/Verbrennungsgases zur sogenannten "Rauchgaskonditionierung".

Alternativ ist es auch möglich, dass das Zumischfluid 6 einen anderen Wirkstoff enthält und dass je nach Verhältnis der Mischung der Fluide 5 und 6 das Verhältnis der beiden Wirkstoffe entsprechend beeinflusst wird.

Durch den Zumischbereich 14 bzw. das optionale Zumischen des Zumischfluids 6 in oder unmittelbar vor der Düsenlanze 2 kann erreicht werden, dass möglichst exakt die gewünschten Mengen an Wirkfluid 5 und Zumischfluid 6 unter insbesondere optionalen Druckbedingungen des Druckgases 7 verdüst werden. Außerdem ist so eine separate Einstellung oder Steuerung jeder Düsenlanze 2 möglich.

Vorzugsweise werden zuerst die Fluide 5 und 6 in dem Zumischbereich 14 miteinander gemischt und erst danach, also etwas stromab, das Druckgas 7 dazugegeben.

Vorzugsweise erfolgt die (vollständige) Ausmischung des Fluidgemischs auch/erst bei der Verdüsung.

Vorzugsweise grenzt der Zumischbereich 14 an den Düsenkopf 12 an und/oder erstreckt sich der Zumischbereich 14, zumindest teilweise, in den Düsenkopf 12.

Die Düsenlanze 2 weist vorzugsweise ein Zumischteil 15 auf. Vorzugsweise bildet das Zumischteil 15 den Zumischbereich 14 oder weist diesen auf.

Vorzugsweise bildet das Zumischteil 15 auch teilweise die Zuleitungen 9A und 9B oder weist diese auf.

Vorzugsweise weist die Düsenlanze 2 zwei Rohre 16A und 16B auf, die die Zuleitungen 9A und 9B bilden. Vorzugsweise sind die Rohre 16A, 16B auslassseitig an das Zumischteil 15 angeschlossen.

Einlassseitig sind die Rohre 16A und 16B an die Versorgungsleitungen 8A und 8B bzw. ersten Ventile 10A angeschlossen oder anschließbar.

Vorzugsweise sind die Rohre 16A, 16B in das Zumischteil 15 eingesteckt oder eingeschweißt, insbesondere so dass jeweils dichte fluidische Verbindungen hergestellt werden.

Vorzugsweise münden die Zuleitungen 9A und 9B bzw. die Rohre 16A und 16B mit Öffnungen 17A, 17B in den Zumischbereich 14 bzw. in das Zumischteil 15. Optionale Kanäle 15A des Zumischteils 15 können dann die Fluide 5 und 6 in den Zumischbereich 14 leiten.

Das Zumischteil 15 ist vorzugsweise durch ein in die Düsenlanze 2 eingesetztes oder einsetzbares Bauteil gebildet, das optional demontierbar oder wechselbar ist, beispielsweise zur Anpassung von Strömungswiderständen oder Mischeigenschaften.

Das Zumischteil 15 kann in den Düsenkopf 12 eingesteckt sein, mit dem Düsenkopf 12 verschraubt sein und/oder mit dem Düsenkopf 12 eine bauliche Einheit bilden bzw. den Düsenkopf 12 aufweisen oder bilden. Vorzugsweise ist das Zumischteil 15 druckfest bzw. dicht mit dem Düsenkopf 12 fluidisch verbunden.

Vorzugsweise weist die Düsenlanze 2 bzw. der Düsenkopf 12 einen Verdüsungsbereich 18 auf. Vorzugsweise ist der Verdüsungsbereich 18 fluidisch - insbesondere unmittelbar oder über einen Zwischen- oder Verwirbelungsbereich 25 - mit dem Zumischbereich 14 und/oder mit der Druckgaszuleitung 9C verbunden.

Der Verdüsungsbereich 18 ist beim Darstellungsbeispiel vorzugsweise im Düsenkörper oder -kopf 12 und/oder zwischen dem Zumischbereich 14 / Zumischteil 15 und der Düsenöffnung 13A angeordnet bzw. gebildet.

Alternativ kann der Verdüsungsbereich 18 auch im Zumischteil 15 oder einem anderen oder separaten Bauteil, wie einem Verbindungsteil 20 (zweite Ausführungsform gemäß Fig. 4), angeordnet oder gebildet sein.

Die Zuführung oder Eindüsung von Druckgas 7 in den Verdüsungsbereich 18 erfolgt vorzugsweise über eine oder mehrere Bohrungen bzw. Zuführungen 18A, wie in Fig. 3 angedeutet. Vorzugsweise ist die Druckgaszuleitung 9C mittels der Zuführungen 18 fluidisch an den Verdüsungsbereich 18 angebunden. Insbesondere verlaufen die Zuführungen 18A schräg zur Längsachse L und/oder von außen nach innen bzw. radial.

Die Zuführungen 18A sind vorzugsweise stromab des Zumischbereichs 14 angeordnet.

Der Verdüsungsbereich 18 ist vorzugsweise stromab des Zumischbereichs 14 und/oder stromauf der Düse 13 bzw. Düsenöffnung 13A angeordnet.

Vorzugsweise sind der Zumischbereich 14 und die dritte Zuleitung bzw. Druckgaszuleitung 9C in dem bzw. über den Verdüsungsbereich 18 fluidisch miteinander verbunden.

Weiter vorzugsweise ist der Verdüsungsbereich 18 nur indirekt, insbesondere durch oder über den Zumischbereich 14, mit den Zuleitungen 9A, 9B verbunden oder an diese angebunden.

Vorzugsweise wird das Druckgas 7 dem Wirkfluid 5 bzw. dem Fluidgemisch in dem Verdüsungsbereich 18, insbesondere durch die Zuführungen 18A, zugeführt bzw. mit diesem vermischt.

Der Verdüsungsbereich 18, die Düse 13 und/oder der Düsenkopf 12 sind vorzugsweise stromab und/oder auslassseitig des Zumischbereichs 14, Zumischteils 15 und/oder Zwischen- bzw. Verwirbelungsbereichs 25 angeordnet bzw. gebildet.

Der Düsenkopf 12 weist eine Düse 13 oder mehrere Düsen 13 auf oder bildet diese.

Der Düsenkopf 12, der Verdüsungsbereich 18 und/oder die Düse 13 sind also zur Verdüsung des Wirkfluids 5 oder Fluidgemischs, insbesondere gemeinsam mit dem oder durch das Druckgas 7, ausgebildet.

Vorzugsweise ist die Düsenlanze 2 derart ausgebildet, dass zunächst eine reine Vermischung des flüssigen Wirkfluids 5 und des flüssigen Zumischfluids 6 in dem Zumischbereich 14 erfolgt und erst anschließend bzw. stromab das Druckgas 7 (im Verdüsungsbereich 18) dem Fluidgemisch aus Wirkfluid 5 und Zumischfluid 6 zugeführt und ein Flüssig/Gas-Gemisch gebildet wird, also erst dann im Verdüsungsbereich 18 und/oder später (gegebenenfalls erst oder ergänzend in der Düse 13) eine Verdüsung erfolgt.

Vorzugsweise erfolgt die Verdüsung in den Abgasraum 3, besonders bevorzugt zumindest im Wesentlichen horizontal.

Die Düse 13 ist vorzugsweise dazu ausgebildet, ein kegelartiges Spray S, insbesondere zumindest näherungsweise in Form eines Vollkegels oder Hohlkegels, zu erzeugen, so dass auch Bereiche ober- und/oder unterhalb der versprühenden Düsenlanze 2 besprüht werden. Es ist jedoch auch möglich, dass die Düse 13 dazu ausgebildet ist, das Spray S als Flachspray zu erzeugen, so dass das Spray S zumindest im Wesentlichen in eine vorzugsweise horizontale Ebene E versprüht wird.

Vorzugsweise ist der Verdüsungsbereich 18 mittig oder zentral in der Düsenlanze 2 angeordnet, insbesondere so dass der Verdüsungsbereich 18 die Längsachse L aufweist bzw. umgibt.

Vorzugsweise weist der Verdüsungsbereich 18 die Düse 13 auf.

Vorzugsweise vergrößert sich der Querschnitt des Verdüsungsbereichs 18 bzw. der Düse 13 in Richtung des Auslasses bzw. Abgasraums 3 zunächst und verkleinert sich dann wieder oder umgekehrt. Der Verdüsungsbereich 18 bzw. die Düse 13 weist vorzugsweise also zwei sich aneinander anschließende Bereiche auf, wobei sich der Querschnitt in einem Bereich vergrößert und in dem anderen Bereich verkleinert. Insbesondere kann die Düse 13 so als Lavaldüse verwendet werden bzw. ist die Düse 13 als Lavaldüse ausgebildet.

Die Düsenlanze 2 weist auslassseitig vorzugsweise eine einzige bzw. genau eine Düse 13 oder Öffnung 13A bzw. einen Auslass auf, insbesondere wobei die Öffnung bzw. der Auslass durch die Düse 13 bzw. Düsenöffnung 13A gebildet ist.

Die Zuleitungen 9A, 9B, 9C bilden vorzugsweise keinen Auslass der Düsenlanze 2 bzw. weisen keinen Auslass auf, über den ein durch die Zuleitungen 9A, 9B, 9C geleitetes Fluid die Düsenlanze 2 unmittelbar bzw. direkt bzw. ungemischt verlassen kann.

Vorzugsweise weist die Düsenlanze 2 bzw. der Düsenkopf 12 ein Halteteil 19 auf. Vorzugsweise umgibt das Halteteil 19 den Düsenkopf 12 in Umfangsrichtung zumindest im Wesentlichen vollständig.

Der Düsenkopf 12 ist insbesondere fluiddicht in das Halteteil 19 eingesteckt oder mit diesem verschraubt oder verschweißt.

Vorzugsweise weist die Düsenlanze 2 ein (drittes) Rohr 16C auf, das die Zuleitung 9C und/oder eine Hülle bzw. ein Außenrohr der Düsenlanze 2 bildet.

Vorzugsweise ist das Halteteil 19 an dem Rohr 16C auslassseitig angebracht, insbesondere mit diesem verschraubt oder verschweißt.

Einlassseitig ist das Rohr 16C an die Versorgungsleitung 8C bzw. ein erstes Ventil 10A angeschlossen oder anschließbar.

Vorzugsweise ist jedes der Rohre 16A, 16B, 16C ein Rohr 16 der Düsenlanze 2.

Die den Zuleitungen 9 und/oder Rohren 16 zugeordneten Ventile 10A sind vorzugsweise als Steuer- oder Regelventile ausgebildet. Weiter ist es auch möglich, dass durch die Ventile 10A ein Zurückfließen eines Fluids 5, 6 in der Zuleitung 9 bzw. dem Rohr 16 verhindert wird.

Des Weiteren können die Zuleitungen 9, der Zumischbereich 14, die Kanäle 15A und/oder die Rohre 16 durch ihre Form, Abmessungen und/oder Volumina dazu ausgebildet sein, dass ein Zurückfließen verhindert wird.

Nachfolgend wird insbesondere auf Fig. 4 Bezug genommen, die eine zweite Ausführungsform der Düsenlanze 2 zeigt. Dabei werden vorrangig Unterschiede zu der ersten Ausführungsform, insbesondere betreffend das Zumischteil 15 und den Zumischbereich 14, erläutert. Von einer wiederholten Beschreibung gleicher oder ähnlicher Merkmale wird abgesehen, so dass die vorherigen Erläuterungen insoweit auch für die zweite Ausführungsform ergänzend oder entsprechend gelten.

Im Unterschied zu der ersten Ausführungsform verlaufen bei der zweiten Ausführungsform die Zuleitungen 9 koaxial, insbesondere zur Längsachse L, so dass eine erste Zuleitung 9 eine zweite Zuleitung 9 umgibt und/oder zwei Zuleitungen 9 ineinander angeordnet sind. Insbesondere ist dabei die Zuleitung 9A die erste Zuleitung 9 und die Zuleitung 9B die zweite Zuleitung 9.

Bei Betrieb der Düsenlanze 2 wird das Wirkfluid 5 insbesondere durch die ganz innen angeordnete Zuleitung 9A geleitet und/oder wird das Zumischfluid 6 durch die Zuleitung 9B geleitet, die die Zuleitung 9A umgibt.

Die Zuleitungen 9, 9A, 9B sind vorzugsweise durch Mischöffnungen 17C in der Wandung der inneren Zuleitung 9, 9A fluidisch miteinander verbunden.

Die (innere) Zuleitung 9, 9A kann auf mehreren Seiten und/oder auf jeder Seite die Mischöffnungen 17C aufweisen.

Vorzugsweise sind die Mischöffnungen 17C nur auf einem, insbesondere dem Zumischbereich 14, Zwischenteil 15 und/oder Düsenkopf 12 zugewandten, axialen Endabschnitt der Zuleitung 9, 9A angeordnet. Insbesondere weist der Zumischbereich 14 die Mischöffnungen 17C auf.

Die obigen Ausführungen zur Anordnung der Zuleitungen 9, 9A, 9B gelten vorzugsweise auch für die Rohre 16, 16A, 16B.

Bei der zweiten Ausführungsform kann die Düsenlanze 2 ein Verbindungsteil 20 aufweisen, welches insbesondere zwischen dem Zumischteil 15 und dem Düsenkopf 12 angeordnet ist bzw. diese miteinander verbindet.

Optional kann das Verbindungsteil 20 den Zumischbereich 14 (auch) bilden.

Das Verbindungsteil 20 kann in das Zumischteil 15 und/oder den Düsenkopf 12 eingesteckt und/oder mit diesen verschweißt sein, insbesondere so dass eine dichte fluidische Verbindung entsteht.

Es ist auch möglich, dass das Verbindungsteil 20 einstückig mit dem Zumischteil 15 und/oder dem Düsenkopf 12 ausgebildet ist.

Vorzugsweise weist die Düsenlanze 2 bei der zweiten Ausführungsform kein Halteteil 19 auf. Insbesondere übernimmt hier der Düsenkopf 12 die Funktion des Halteteils 19 und/oder weist der Düsenkopf 12 das Halteteil 19 auf.

Vorzugsweise ist das Rohr 16 bei der zweiten Ausführungsform also auslassseitig an den Düsenkopf 12 angeschlossen. Vorzugsweise ist das Rohr 16C in den Düsenkopf 12 eingesteckt oder mit diesem verschraubt oder verschweißt, insbesondere so dass eine dichte fluidische Verbindung hergestellt wird.

Generell kann insbesondere sowohl bei der ersten als auch zweiten Ausführungsform zwischen dem Zumischbereich 14 und dem Verdüsungsbereich 18 der optionale Zwischen- bzw. Verwirbelungsbereich 25 angeordnet oder gebildet sein, beispielsweise durch eine Ringnut, Schulter, Vergrößerung des Strömungsquerschnitts, ein Mischelement und/oder dergleichen, um das Vermischen von Wirkfluid 5 und Zumischfluid 6 zu bewirken oder (weiter) zu unterstützen, besonders bevorzugt durch Erzeugung von Turbulenzen, Wirbeln oder dergleichen. So kann erreicht werden, dass das flüssige Fluidgemisch aus den beiden Fluiden 5 und 6 in gewünschter Weise bzw. ausreichend vermischt ist, bevor das Druckgas 7 zugeleitet wird bzw. eine Verdüsung und/oder eine Bildung eines Gas-Flüssigkeits-Gemisches erfolgt.

Vorzugsweise weist die Verbrennungsanlage 1 ein Steuerungssystem 24 auf, insbesondere wobei das Steuerungssystem 24 zur Steuerung der Abgasbehandlung ausgebildet ist. Die Steuerung erfolgt insbesondere durch Steuerung der Zuflüsse, insbesondere der Fluide 5 und 6, zu den Düsenlanzen 2 und/oder des Drucks des Druckgases 7.

Vorzugsweise weist das Steuerungssystem 24 Messeinrichtungen 21 auf, die insbesondere zur Messung von Drücken ausgebildet sind. Vorzugsweise dienen die Messeinrichtungen 21 zur Messung des Drucks des Druckgases 7.

Insbesondere können die der Druckgaszuleitung 9C zugeordneten Messeinrichtungen 21 Manometer zur Druckmessung sein, die auch als Druckregler verwendet werden können. Besonders bevorzugt ist mit den Manometern der Druck des Druckgases 7 messbar und einstellbar.

Weiter können die Messeinrichtungen 21 auch zur Messung von Zuflüssen bzw. Zuflussmengen, insbesondere der Fluide 5, 6, ausgebildet sein bzw. dienen.

Zur Vereinfachung der Darstellung sind in Fig. 1 und 2 jedoch nur Messeinrichtungen 21 dargestellt, die der Versorgungsleitung 8C bzw. Zuleitung 9C für das Druckgas 7 zugeordnet sind.

Es ist auch möglich, dass die Messeinrichtungen 21 die Ventile 10 aufweisen bzw. dass die Messeinrichtungen 21 multifunktionale Mess-Dosier-Einrichtungen zur gleichzeitigen Messung und Dosierung sind.

Vorzugsweise weist das Steuerungssystem 24 also verschiedene bzw. unterschiedlich ausgebildete Messeinrichtungen 21 auf.

Des Weiteren weist das Steuerungssystem 24 vorzugsweise eine oder mehrere Messeinrichtungen 22 zur Messung einer Menge oder Konzentration von Schadstoffen, insbesondere Stickoxiden NOₓ und/oder Schwefeloxiden SOₓ, im Abgas A auf.

Es können eine oder mehrere Messeinrichtungen 22 vorgesehen sein, die bevorzugt in dem Schornstein der Verbrennungsanlage 1 angeordnet sind. Die Messeinrichtungen 22 können in verschiedenen Höhen im Schornstein bzw. Abgasraum 3 und/oder auf verschiedenen Seiten des Schornsteins bzw. Abgasraums 3 angeordnet sein. Zur Vereinfachung ist in Fig. 2 jedoch nur eine Messeinrichtung 22 dargestellt. Optional kann auch jede Ebene E mit Düsenlanzen 2 eine oder mehrere Messeinrichtungen 22 aufweisen, die insbesondere an der Wand 11 oder in der Nähe der Wand 11 angeordnet ist.

Weiter weist das Steuerungssystem 24 vorzugsweise ein oder mehrere Thermometer 23 zur Messung von Temperaturen T, insbesondere in dem Abgasraum 3, auf.

Vorzugsweise sind die Thermometer 23 im Abgasraum 3, besonders bevorzugt auf Höhe der Ebenen E, angeordnet.

Es können mehrere Thermometer 23 vorgesehen sein, die insbesondere in verschiedenen Höhen im Abgasraum 3 und/oder auf verschiedenen Seiten des Abgasraums 3 angeordnet sind. Zur Vereinfachung ist in Fig. 2 jedoch nur ein Thermometer 23 dargestellt.

Der Begriff "Thermometer" ist im Rahmen der vorliegenden Erfindung vorzugsweise breit zu verstehen. Insbesondere wird unter einem Thermometer grundsätzlich jede Vorrichtung oder jedes System verstanden, das zum Messen, Erfassen oder Bestimmen einer Temperatur T im Abgasraum 3 während des Betriebs der Verbrennungsanlage 1 ausgebildet oder geeignet ist. Dabei ist es insbesondere auch möglich, dass die Temperatur T nur indirekt oder mittelbar gemessen wird, nämlich insbesondere aus anderen Messwerten, insbesondere mittels einer Formel und/oder eines Algorithmus, bestimmt wird, beispielsweise aus der Messung einer (elektromagnetischen) Wellenlänge oder einer Schallgeschwindigkeit oder dergleichen.

Vorzugsweise ist das Thermometer 23 bzw. sind die Thermometer 23 durch ein System zur akustischen Gastemperaturmessung und/oder Schallpyrometrie oder durch ein oder mehrere Pyrometer oder Strahlungsthermometer gebildet.

Vorzugsweise ist jeder Düsenlanze 2, jeder Versorgungsleitung 8, jeder Zuleitung 9 und/oder jeder Ebene E jeweils eine Messeinrichtung 21, eine Messeinrichtung 22, ein Ventil 10 und/oder ein Thermometer 23 zugeordnet. Es ist insbesondere auch möglich, dass die Düsenlanzen 2 jeweils eine oder mehrere Messeinrichtungen 21, 22, Ventile 10 und/oder Thermometer 23 aufweisen.

Vorzugsweise sind die Messeinrichtungen 21, 22 und/oder Thermometer 23 dazu ausgebildet, die von ihnen gemessenen Signale und/oder ermittelten Messwerte an das Steuerungssystem 24 weiterzuleiten.

Vorzugsweise empfängt das Steuerungssystem 24 von den Messeinrichtungen 21, 22 und/oder den Thermometern 23 gemessene Signale oder Messwerte und/oder verarbeitet das Steuerungssystem 24 diese Signale oder Messwerte bzw. ist das Steuerungssystem 24 dazu ausgebildet.

Vorzugsweise steuert das Steuerungssystem 24, insbesondere auf Grundlage dieser Signale oder Messwerte, die Ventile 10, insbesondere wobei die Zuflüsse zu den Düsenlanzen 2 und/oder Drücke des Druckgases 7 gesteuert oder eingestellt werden. Insbesondere sind die Ventile 10 also mit dem Steuerungssystem 24 öffenbar und/oder schließbar.

Das Steuerungssystem 24 ist vorzugsweise dazu ausgebildet, die Abgasbehandlung bzw. Mischung des Fluids und/oder Förderung bzw. Zumischung des Wirkstoffs bzw. Wirkfluids 5 in Abhängigkeit der von dem Thermometer 23 bzw. den Thermometern 23 gemessenen Temperatur T in dem Abgasraum 3 zu steuern. Die Verbrennungsanlage 1 bzw. das Steuerungssystem 24 ist vorzugsweise dazu ausgebildet, auf Grundlage oder in Abhängigkeit der von dem Thermometer 23 bzw. den Thermometern 23 gemessenen Temperatur T die Menge und/oder Konzentration des Wirkfluids 5 und/oder des Wirkstoffs, insbesondere des verdüsten Fluids, einzustellen oder zu steuern.

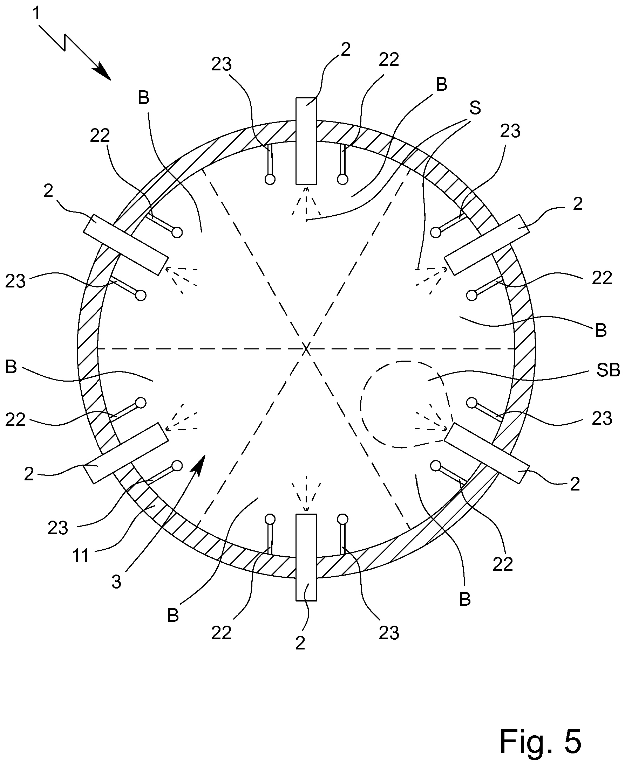

Vorzugsweise weist der Abgasraum 3 verschiedene Bereiche B auf oder ist der Abgasraum 3 in verschiedene Bereiche B unterteilt oder sind dem Abgasraum 3 verschiedene Bereiche B zugeordnet. Dies ist beispielhaft in dem schematischen Schnitt gemäß Fig. 5 dargestellt, der eine modifizierte Ausführungsform der Verbrennungsanlage 1 bzw. des Abgasraums 3 zeigt.

Bei dem Darstellungsbeispiel aus Fig. 5 sind die Bereiche B Sektoren eines insbesondere zylindrischen Abgasraums 3. Die Bereiche B können jedoch grundsätzlich eine beliebige zweidimensionale oder dreidimensionale Form aufweisen oder bilden.

Vorzugsweise ist jeder Bereich B eine Ebene E oder ein Sektor einer Ebene E. Vorzugsweise sind die Bereiche B zumindest im Wesentlichen zweidimensional oder flach oder schichtartig ausgebildet und/oder erstrecken sich flächig in radialer Richtung zur vertikalen und/oder Hauptströmungsrichtung des zu behandelnden Abgases A.

Vorzugsweise ist jedem Bereich B eine Düsenlanze 2, ein Thermometer 23 und/oder eine Messeinrichtung 22 zur Messung einer Menge oder Konzentration von Schadstoffen, insbesondere in dem Abgas A, zugeordnet. Insbesondere kann jeder Bereich B eine Düsenlanze 2, ein Thermometer 23 und/oder eine Messeinrichtung 22 aufweisen.

Die Verbrennungsanlage 1 ist, insbesondere mittels der Thermometer 23 und/oder des Steuerungssystems 24, vorzugsweise dazu ausgebildet, die Temperatur T in verschiedenen Bereichen des Abgasraums 3 zu messen. Vorzugsweise kann die Messung der Temperatur T in verschiedenen Bereichen B unabhängig voneinander erfolgen.

Vorzugsweise ist die Verbrennungsanlage 1 dazu ausgebildet, eine Menge oder Konzentration C des Wirkstoffs in dem verdüsten bzw. in den Abgasraum 3 abgegebenen Fluid oder Fluidgemisch sehr schnell, also mit geringer Totzeit, anzupassen, vorzugsweise in weniger als 5 s, bevorzugt in weniger als 1 s, insbesondere in weniger als 0,1 s, besonders bevorzugt in weniger als 0,01 s, nach der Messung der Temperatur T. Dies wird insbesondere durch die vorschlagsgemäße Düsenlanze 2 ermöglicht. Hierauf wird später noch genauer eingegangen.

Bei einem Verfahren zur Abgasbehandlung in der Verbrennungsanlage 1 wird vorzugsweise eine Temperatur T in dem Abgasraum 3 gemessen und insbesondere die Menge oder Konzentration C des Wirkstoffs in dem verdüsten Fluid oder Fluidgemisch in Abhängigkeit von der gemessenen Temperatur T eingestellt oder gesteuert.

Die Menge oder Konzentration C des Wirkstoffs in dem verdüsten Fluid oder Fluidgemisch wird im Folgenden verkürzt als Menge oder Konzentration C des Wirkstoffs bezeichnet. Diese Begriffe beziehen sich also jeweils auf das verdüste oder eingedüste Fluid oder Fluidgemisch, sofern nichts anderes erwähnt ist.

Die Menge oder Konzentration C des Wirkstoffs wird dabei vorzugsweise über das Mischungsverhältnis zwischen dem Wirkfluid 5 und dem Zumischfluid 6 eingestellt, gesteuert oder bestimmt. Dabei enthält, wie bereits weiter oben beschrieben, das Wirkfluid 5 den Wirkstoff, also beispielsweise Ammoniak, Harnstoff und/oder eine calciumhaltige Verbindung.

Vorzugsweise ist die Konzentration C des Wirkstoffs in dem Wirkfluid 5 konstant oder nicht veränderlich, insbesondere da das Wirkfluid 5 mit dem Wirkstoff, wie weiter oben erläutert, in einem Tank 4 gespeichert ist.

Mit dem Begriff "Menge" wird vorzugsweise die Absolutmenge des (in den Abgasraum 3) abgegebenen oder eingedüsten Wirkstoffs pro Zeiteinheit, beispielsweise in l/min oder kg/min, oder eine dazu äquivalente Größe bezeichnet.

Der Volumenstrom des abgegebenen Fluids - je nach Mischung das Wirkfluid 5, das Zumischfluid 6 oder ein Gemisch daraus - und der Volumenstrom oder Druck des Druckgases 7 sind vorzugsweise auf die Verbrennungsanlage 1 bzw. den Abgasraum 3 und die jeweilige Düsenlanze 2 bzw. Düse 3 oder Gruppen davon abgestimmt und werden vorzugsweise beim Betrieb der Verbrennungsanlage 1 bzw. während des Verfahrens zur Abgasbehandlung nicht verändert. Vorzugsweise ist die Konzentration C oder Menge des Wirkstoffs bzw. das Mischungsverhältnis von Wirkfluid 5 zu Zumischfluid 6 der einzige Parameter, der bei dem Verfahren bzw. während der Abgasbehandlung oder der Eindüsung - insbesondere individuell für einzelne Düsen 13 oder Düsenlanzen 2 bzw. Gruppen von Düsen 13 oder Düsenlanzen 2 - verändert wird oder veränderbar ist.

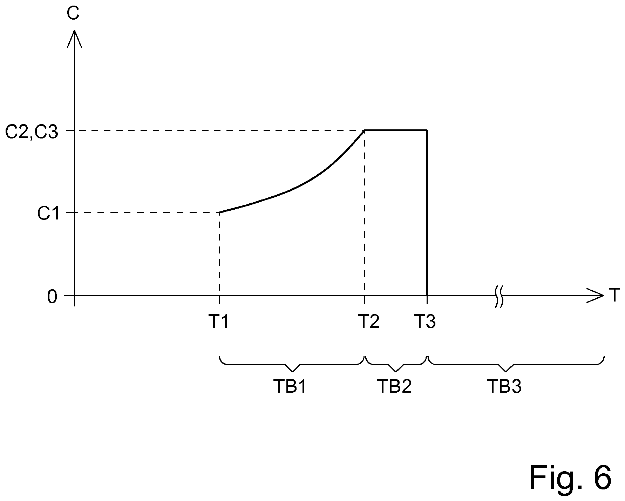

In Fig. 6 ist beispielhaft ein möglicher (angestrebter) funktionaler Zusammenhang zwischen der Konzentration C des Wirkstoffs in dem eingedüsten bzw. in den Abgasraum 3 abgegebenen Fluid und der Temperatur T in dem Abgasraum 3 bzw. dem entsprechenden Bereich B des Abgasraums 3 bzw. eine Abhängigkeit der Konzentration C von der Temperatur T dargestellt.

Der dargestellte bzw. nachfolgend beschriebene (funktionale) Zusammenhang zwischen der Konzentration C des Wirkstoffs und der Temperatur T ist vorzugsweise ein Soll-Zusammenhang oder ein Soll-Verlauf, der durch die Steuerung bzw. mittels des Steuerungssystems 24 zur Abgasbehandlung erreicht werden soll. Die Steuerung erfolgt also vorzugsweise derart, dass der in Fig. 6 dargestellte und/oder im Folgenden beschriebene Verlauf oder funktionale Zusammenhang zwischen der Konzentration C und der gemessenen Temperatur T zumindest näherungsweise erreicht oder realisiert wird.

Vorzugsweise bestehen bei unterschiedlichen Temperaturen T bzw. in unterschiedlichen Temperaturbereichen TB unterschiedliche Zusammenhänge zwischen der Konzentration C und der Temperatur T. In unterschiedlichen Temperaturbereichen TB erfolgt also vorzugsweise eine unterschiedliche Anpassung der Konzentration C des in den Abgasraum 3 abgegebenen oder eingedüsten Wirkstoffs an die (gemessene) Temperatur T.

Im Folgenden wird insbesondere auf drei verschiedene Temperaturbereiche TB1, TB2, TB3 eingegangen, die zur Unterscheidung als erster, zweiter und dritter Temperaturbereich TB1, TB2, TB3 bezeichnet werden. Dies impliziert jedoch keine Reihenfolge der Temperaturbereiche TB und es impliziert auch nicht, dass zwingend drei Temperaturbereiche TB1, TB2, TB3 vorhanden sein müssen. Insbesondere ist es auch möglich, dass nur zwei Temperaturbereiche TB vorhanden sind bzw. die Steuerung nur in zwei Temperaturbereichen TB unterschiedlich erfolgt, beispielsweise so, wie es nachfolgend für den ersten und den dritten Temperaturbereich TB1 und TB3 beschrieben ist. Die Begriffe "erster, zweiter und dritter" Temperaturbereich TB1, TB2, TB3 sind optional und bedarfsweise austauschbar.

Für die nachfolgend beschriebenen Temperaturen (erste Temperatur T1, zweite Temperatur T2 und dritte Temperatur T3) und den diesen Temperaturen zugeordneten Konzentrationen (erste Konzentration C1, zweite Konzentration C2, dritte Konzentration C3) gilt das Gleiche wie für die Temperaturbereiche TB1, TB2, TB3.

Erfindungsgemäß wird bei steigender Temperatur T die Menge oder Konzentration C des Wirkstoffs erhöht. Mit anderen Worten ist die Konzentration C als Funktion der Temperatur T monoton oder streng monoton steigend. Dies gilt in einem ersten Temperaturbereich TB1 zwischen einer ersten Temperatur T1 und einer zweiten Temperatur T2, wobei *T2*>*T1* gilt. Die erste Temperatur T1 und die zweite Temperatur T2 bilden die untere und obere Grenztemperatur bzw. Grenze des ersten Temperaturbereichs TB1.

Beispielsweise kann zwischen der Konzentration C und der Temperatur T, insbesondere in dem ersten Temperaturbereich TB1, zumindest näherungsweise ein linearer, exponentieller, quadratischer oder sonstiger polynomieller Zusammenhang bestehen. Es sind jedoch auch andere funktionale Zusammenhänge möglich, beispielsweise eine (zumindest näherungsweise) logarithmische oder wurzelförmige Abhängigkeit der Konzentration C von der Temperatur T.

Vorzugsweise hat die Konzentration C des Wirkstoffs bei der ersten Temperatur T1 den Wert C1, es gilt also der funktionale Zusammenhang *C(T*=*T1)*=*C1.* In analoger Weise wird der Wert der Konzentration C bei der zweiten Temperatur T2 mit dem Bezugszeichen C2 bezeichnet, so dass gilt: *C(T*=*T2)*=*C2.*

Die zweite Konzentration C2 ist größer als die erste Konzentration C1 (C2>C1).

Die erste Temperatur T1 beträgt etwa 800 °C.

Die zweite Temperatur T2 beträgt etwa 980 °C.

Durch die Erhöhung der Konzentration C bei steigender Temperatur T bzw. Erniedrigung der Konzentration C bei fallender Temperatur T kann insbesondere das Eindüsen einer zu großen Menge des Wirkstoffs in den Abgasraum 3 verhindert werden. Dadurch wird verhindert, dass ein Anteil des eingedüsten Wirkstoffs nicht mit dem Abgas A bzw. den Schadstoffen reagiert. Dieser auch als "Schlupf" bezeichnete Überschuss bzw. nicht verbrauchte Anteil kann eine unerwünschte Verschmutzung der Verbrennungsanlage 1 bzw. des Abgasraums 3 durch nicht verbrauchtes Wirkfluid 5 bzw. nicht verbrauchten Wirkstoff bewirken. Dieser Schlupf kann durch die genannte Veränderung der Menge bzw. Konzentration verhindert oder zumindest verringert werden.

Vorzugsweise wird unterhalb der ersten Temperatur T1 die Konzentration C bei fallender Temperatur T (weiter) verringert und/oder wird gar kein Wirkstoff in den Abgasraum 3 eingedüst. Unterhalb der ersten Temperatur T1 kann die Einstellung oder Steuerung der Konzentration C oder Menge des Wirkstoffs jedoch in der gleichen Weise oder in ähnlicher Weise wie in dem ersten Temperaturbereich TB1 erfolgen.

Erfindungsgemäß erfolgt außerhalb des ersten Temperaturbereichs TB1 eine andere Einstellung oder Steuerung der Konzentration C des Wirkstoffs in Abhängigkeit von der Temperatur T als in dem ersten Temperaturbereich TB1. Erfindungsgemäß besteht also außerhalb des ersten Temperaturbereichs TB1 ein anderer funktionaler Zusammenhang *C(T)* zwischen der Konzentration C und der Temperatur T als in dem ersten Temperaturbereich TB1.

Der weitere bzw. zweite Temperaturbereich TB2 ist durch die zweite Temperatur T2 und die weitere, dritte Temperatur T3, die größer als die zweite Temperatur T2 ist (*T3*>*T2*), begrenzt. Die zweite und dritte Temperatur T2, T3 bilden die untere und obere Grenztemperatur bzw. Grenze des zweiten Temperaturbereichs TB2. Der Wert der Konzentration C bei der dritten Temperatur T3 wird im Folgenden mit dem Bezugszeichen C3 bezeichnet, so dass gilt: *C(T*=*T3)*=*C3*.

Erfindungsgemäß besteht in dem zweiten Temperaturbereich ein anderer funktionaler Zusammenhang *C(T)* zwischen der Konzentration C und der Temperatur T als in dem ersten Temperaturbereich TB1.

Erfindungsgemäß ist die Temperatur C in dem zweiten Temperaturbereich TB2 zumindest im Wesentlichen konstant und/oder sind die zweite und dritte Konzentration C2 und C3 zumindest ungefähr gleich groß (*C2≈C3*).

Die dritte Temperatur T3 beträgt etwa 1040 °C.

Die dritte Temperatur T3 ist vorzugsweise eine untere Grenze oder Grenztemperatur eines dritten Temperaturbereichs TB3. Der Temperaturbereich TB3 ist vorzugsweise halb offen und/oder nicht durch eine obere Grenztemperatur begrenzt.

Vorzugsweise bildet die Temperatur T3 eine Grenztemperatur, bei deren Erreichen oder Überschreiten die Menge oder Konzentration C des eingedüsten Wirkstoffs reduziert wird oder kein Wirkstoff eingedüst wird. Es gilt also vorzugsweise *C(T*>*T3)*<*C3* oder *C(T*>*T3)*=*0.* Die Funktion *C(T)* ist für *T*>*T3* bzw. in dem dritten Temperaturbereich TB3 vorzugsweise (streng) monoton fallend und/oder konvergiert, beispielsweise exponentiell fallend, gegen Null. Vorzugsweise weist der Graph der Funktion *C(T)* an der Stelle *T*=*T3* einen Knick auf bzw. ist die Funktion *C(T)* an der Stelle *T*=*T3* nicht differenzierbar. Alternativ oder zusätzlich weist die Funktion *C(T)* an der Stelle *T*=*T3* einen Sprung oder eine Unstetigkeit auf.

Alternativ zu der dargestellten Funktion *C(T)* kann die Konzentration C bei Temperaturen *T*>*T3* bzw. in dem dritten Temperaturbereich TB3 auch zumindest näherungsweise linear, exponentiell, quadratisch oder gemäß einem anderen polynomiellen Zusammenhang abfallen.

Vorzugsweise wird bei einer Veränderung der Temperatur T bzw. bei einer Temperaturänderung in dem Abgasraum 3 - insbesondere in einem Bereich B - die Menge oder Konzentration C des Wirkstoffs in dem verdüsten Fluid bzw. Fluidgemisch - insbesondere entsprechend in diesem Bereich B oder einem zugeordneten Sprühbereich SB - angepasst oder verändert, insbesondere an die geänderte Temperatur T.

Bei dem Steuer- bzw. Regelungsprozess kann eine Anpassung der Konzentration C des Wirkstoffs in dem verdüsten oder eingedüsten Fluid bzw. Fluidgemisch grundsätzlich nicht instantan erfolgen, sondern es tritt eine sogenannte Totzeit zwischen dem Zeitpunkt der Messung oder Erfassung der Temperaturänderung und dem Zeitpunkt auf, an dem sich die Zusammensetzung des verdüsten Fluidgemischs bzw. die Konzentration des Wirkstoffs in dem eingedüsten - also an den Abgasraum 3 oder Bereich B oder SB abgegebenen - Fluidgemisch (tatsächlich) ändert.

Allgemein wird in der Regelungstechnik als Totzeit die Zeitspanne zwischen einer Signaländerung am Systemeingang und einer entsprechenden Signalantwort am Systemausgang einer Regelstecke bezeichnet. Bei dem vorliegenden Verfahren ist die Signaländerung am Systemeingang das Messen oder Erfassen der Temperaturänderung und die Signalantwort das Eindüsen eines Fluids mit veränderter Zusammensetzung in den Abgasraum 3. Die Totzeit ist hier also der zeitliche Abstand zwischen der Messung der Temperaturänderung und dem Zeitpunkt, zu dem sich die Konzentration C oder Menge des Wirkstoffs in dem eingedüsten bzw. in den Abgasraum 3 abgegebenen Fluid oder Fluidgemisch ändert.

Vorzugsweise beträgt die Totzeit zur Anpassung der Menge oder Konzentration des Wirkstoffs in dem verdüsten Fluidgemisch, insbesondere als Reaktion auf eine Änderung der Temperatur T in dem Abgasraum 3, weniger als 5 s, bevorzugt weniger als 1 s, besonders bevorzugt weniger als 0,1 s, insbesondere weniger als 0,01 s. Dies wird insbesondere dadurch erreicht, dass die Mischung des Zumischfluids 6 mit dem Wirkfluid 5 (erst) in der Düsenlanze 2, insbesondere in dem Zumischbereich 14 bzw. erst kurz vor der Verdüsung bzw. dem Verdüsungsbereich 18 erfolgt.

Eine derartig kurze Totzeit wird insbesondere dadurch ermöglicht, dass das Mischen des Wirkfluids 5 mit dem Zumischfluid 6 erst kurz bzw. unmittelbar vor der Verdüsung erfolgt. So befindet sich in der Düsenlanze 2 nur ein sehr kleines "Totvolumen", also nur ein sehr kleines Volumen des Gemischs aus Zumischfluid 6 und Wirkfluid 5, das zunächst in den Abgasraum 3 abgegeben werden muss, bevor durch eine Änderung des Mischungsverhältnisses zwischen Wirkfluid 5 und Zumischfluid 6 ein Fluidgemisch mit veränderter Zusammensetzung bzw. veränderter Konzentration C oder Menge des Wirkstoffs in den Abgasraum 3 eingedüste werden kann. Vorzugsweise hängt die Totzeit im Wesentlichen von der Größe des Totvolumens ab, wobei ein geringes Totvolumen eine kurze Totzeit zur Folge hat.

Dementsprechend ist es bei der Düsenlanze 2 bevorzugt, dass einerseits zunächst bzw. stromauf des Verdüsungsbereichs 18 ein Zumischbereich 14 vorgesehen ist bzw. eine Mischung des Zumischfluids 6 mit dem Wirkfluid 5 erfolgt, und andererseits der Zumischbereich 14 nur einen geringen Abstand von dem Verdüsungsbereich 18, insbesondere wenige Zentimeter, aufweist.

Auf diese Weise kann einerseits eine gute bzw. definierte Durchmischung des Wirkfluids 5 und des Zumischfluids 6 zu dem zu verdüsenden Fluidgemisch und andererseits eine geringe Totzeit bzw. schnelle Anpassung und somit effiziente Abgasreinigung erreicht werden.

Vorzugsweise wird die Temperatur T in verschiedenen Bereichen B des Abgasraums 3 separat voneinander gemessen oder bestimmt.

Alternativ oder zusätzlich ist es auch möglich, dass die Temperatur T in verschiedenen Sprühbereichen SB oder Ebenen E separat voneinander gemessen wird.

Der Sprühbereich SB einer Düsenlanze 2 ist insbesondere der Bereich, den der von der Düsenlanze 2 abgegebene Spray S (primär) erreicht oder benetzt. Dies ist in Fig. 6 schematisch dargestellt.

Vorzugsweise weist jede Düsenlanze 2 einen Sprühbereich SB auf oder ist jeder Düsenlanze 2 ein Sprühbereich SB zugeordnet. Die Sprühbereiche SB verschiedener Düsenlanzen 2 sind vorzugsweise voneinander getrennt oder bilden disjunkte Bereiche, sie können jedoch auch überlappen.

Vorzugsweise sind einem oder jedem (Mess-)Bereich B jeweils ein oder mehrere Sprühbereiche SB bzw. Düsen 13 oder Düsenlanzen 2 zugeordnet.

Alternativ oder zusätzlich wird die Temperatur T in verschiedenen Ebenen E des Abgasraums 3 gemessen. Vorzugsweise wird die Temperatur T in verschiedenen Bereichen B bzw. Sektoren einer oder jeder Ebene E, insbesondere separat voneinander, gemessen.

Alternativ oder zusätzlich kann vorgesehen sein, dass eine Schadstoffmenge oder Schadstoffkonzentration in verschiedenen Bereichen B, Ebenen E und/oder Sprühbereichen SB des Abgasraums 3 separat voneinander gemessen wird.

Die Schadstoffmenge oder Schadstoffkonzentration kann jedoch auch zusätzlich oder alternativ in verschiedenen Ebenen E des Abgasraums 3 gemessen werden.

Vorzugsweise wird die Schadstoffmenge oder Schadstoffkonzentration in verschiedenen Bereichen B bzw. Sektoren einer Ebene E, insbesondere separat voneinander, gemessen.

Auf diese Weise ist es möglich, dass für einzelne Düsenlanzen 2 oder für jede Düsenlanze 2 eine der jeweiligen Düsenlanze 2 zugeordnete Temperatur T und/oder Schadstoffmenge oder Schadstoffkonzentration gemessen oder ermittelt wird, so dass das Mischungsverhältnis von Zumischfluid 6 und Wirkfluid 5 bzw. die Konzentration C oder Menge des Wirkstoffs in dem von der Düsenlanze 2 abgegebenen bzw. verdüsten Fluid oder Fluidgemisch für jeden Bereich B, jeden Sprühbereich SB, jede Ebene E, jeden Sektor und/oder jede Düsenlanze 2, insbesondere separat oder einzeln, eingestellt wird.

Insbesondere ist es auch möglich, dass die Temperatur in einem Bereich B oder Sprühbereich SB und/oder in einer Ebene E gemessen wird, wobei die Anpassung der Menge oder Konzentration C des eingedüsten Wirkstoffs in einem anderen Bereich B vorgenommen wird bzw. - gegebenenfalls zusätzlich - in einem Bereich B vorgenommen wird, in dem die Temperatur T nicht gemessen wurde. Insbesondere kann in einem Bereich B die Anpassung der Menge oder Konzentration C des Wirkstoffs also auf Grundlage der in einem anderen Bereich B gemessenen Temperatur T erfolgen.

Beispielsweise ist es möglich, in einer Ebene E die Temperatur T zu messen und in einer darunter bzw. stromauf liegenden Ebene E bedarfsweise nur Wasser oder Zumischfluid 6 einzudüsen, um zunächst die Abgastemperatur zu senken, insbesondere auf eine Temperatur T unterhalb der dritten Grenztemperatur T3 oder zweiten Grenztemperatur T, um dann in der Ebene E, in der oder kurz vor der die Temperatur T gemessen wird, dann den Wirkstoff in der gewünschten Menge bzw. Konzentration C einzudüsen, also eine optimale Abgasbehandlung durchzuführen oder zu ermöglichen.

Zusätzlich zu bereits genannten Aspekten und Merkmalen kann ein Verfahren zur Abgasbehandlung in der Verbrennungsanlage 1 die nachfolgend beschriebenen Aspekte und Merkmale aufweisen.

Vorzugsweise werden die Messeinrichtungen 21, 22, die Ventile 10, die Thermometer 23 und/oder das Steuerungssystem 24 bei einer ersten Inbetriebnahme der Verbrennungsanlage 1 und/oder der Düsenlanzen 2 kalibriert, voreingestellt und/oder aufeinander abgestimmt.

Vorzugsweise erfolgt die Steuerung durch das Steuerungssystem 24 in Abhängigkeit der von den Thermometern 23 gemessenen Temperaturen T und/oder den von den Messeinrichtungen 22 gemessenen Mengen oder Konzentrationen von Schadstoffen, insbesondere Stickoxiden NOₓ und/oder Schwefeloxiden SOₓ.

Vorzugsweise stellt das Steuerungssystem 24, insbesondere auf Grundlage dieser Signale, die Menge und/oder die Konzentration des Wirkfluids 5, des Zumischfluids 6, des Fluidgemisches 7 und/oder des Wirkstoffes ein, vorzugsweise sodass eine optimale Abgasbehandlung oder -reinigung erfolgt.

Dabei ist es insbesondere auch möglich, dass dem Wirkfluid 5 kein Zumischfluid 6 zugemischt wird und/oder dass nur das Wirkfluid 5 mittels des Druckgases 7 verdüst wird. Vorzugsweise erfolgt dies oberhalb der Grenztemperatur bzw. dritten Temperatur T3 und/oder zur Kühlung des Rauchgases bzw. Abgases A.

Die Steuerung durch das Steuerungssystem 24 kann - ggf. nach einer Kalibrierung - insbesondere automatisch erfolgen, vorzugsweise wozu das Steuerungssystem 24 einen entsprechend ausgebildeten Computer oder Prozessor aufweist.

Vorzugsweise werden die Ventile 10 bzw. die Düsenlanzen 2 einzeln, bereichsweise und/oder ebenenweise eingestellt bzw. gesteuert.

Das Steuerungssystem 24 bzw. die Verbrennungsanlage 1 ist vorzugsweise dazu ausgebildet, die Zumischung des Zumischfluids 6 zu dem Wirkfluid 5, insbesondere also das Mischungsverhältnis zwischen Wirkfluid 5 und Zumischfluid 6, für eine oder jede Düsenlanze 2 und/oder für eine oder jede Ebene E individuell bzw. unabhängig von weiteren Düsenlanzen 2 und/oder Ebenen E einzustellen bzw. zu steuern.

Alternativ oder zusätzlich kann vorgesehen sein, dass das Steuerungssystem 24 bzw. die Verbrennungsanlage 1 dazu ausgebildet ist, die Zumischung des Druckgases 7 zu dem Wirkfluid 5 und/oder dem Zumischfluid 6 bzw. das Mischungsverhältnis zwischen Wirkfluid 5, Zumischfluid 6 und/oder Druckgas 7 individuell für eine oder jede Düsenlanze 2 und/oder eine oder jede Ebene E einzustellen bzw. zu steuern.

Vorzugsweise ist der Druck des Druckgases 7 durch das Steuerungssystem 24 einstellbar.

Vorzugsweise wird zur optimalen Abgasbehandlung ein Druck zwischen 3000 hPa und 6000 hPa, insbesondere zwischen 4000 hPa und 5000 hPa verwendet.

Vorzugsweise sind durch den Druck des Druckgases 7 die Eigenschaften des erzeugten Aerosols bzw. Sprays S beeinflussbar oder veränderbar, insbesondere die Wurfweite und die Tröpfchengröße.

Vorzugsweise sind diese Größen alternativ oder zusätzlich durch die Form und/oder Dimensionierung der Düsenlanze 2, insbesondere der Düse 13, einstellbar oder beeinflussbar.

Vorzugsweise wird der Zufluss des Wirkfluids 5 und/oder Zumischfluids 6 über einen Massenstrom, einen Volumenstrom, eine Absolutmenge und/oder eine Menge pro Zeiteinheit des jeweiligen Fluids eingestellt und/oder kontrolliert.

Vorzugsweise wird ein Massenstrom, ein Volumenstrom, eine Konzentration, eine Absolutmenge und/oder eine Menge pro Zeiteinheit des Wirkstoffs eingestellt und/oder kontrolliert. Insbesondere kann dies für jeden Bereich B, jeden Sprühbereich SB, jede Ebene E und/oder jede Düsenlanze 2 separat erfolgen.

Besonders bevorzugt wird zur Abgasbehandlung die Gesamtmenge der den Düsenlanzen 2 zugeführten Fluide 5 und 6 zumindest im Wesentlichen konstant gehalten, so dass nur das Mischungsverhältnis zwischen dem Wirkfluid 5 und dem Zumischfluid 6 verändert wird.

Vorzugsweise wird auch der Druck des Druckgases 7 zumindest im Wesentlichen konstant gehalten. Es ist jedoch auch möglich, den Druck an die Gesamtmenge der den Düsenlanzen 2 zugeführten Fluide 5 und 6 bzw. an das Mischungsverhältnis der Fluide 5 und 6 anzupassen.

Besonders bevorzugt wird also die Düsenlanze 2 bzw. die Verbrennungsanlage 1 so betrieben, dass ein möglichst konstanter Volumen- oder Massenstrom der Fluide 5 und/oder 6 (unabhängig von deren Mischungsverhältnis) insbesondere bei möglichst konstantem Druck des Druckgases 7 eingedüst bzw. verdüst wird.

Es ist bevorzugt, dass die Menge bzw. der Volumenstrom des in den Abgasraum 3 eingedüsten oder in den Abgasraum 3 abgegebenen Fluids bzw. Fluidgemisches konstant gehalten wird und/oder nur das Mischungsverhältnis zwischen Wirkfluid 5 und Zumischfluid 6 des insgesamt in den Abgasraum 3 und/oder von einer, insbesondere jeder, einzelnen Düsenlanze 2 abgegebenen Fluids verändert wird. Vorzugsweise wird ausschließlich bzw. als einziger Parameter die Menge oder Konzentration C des eingedüsten Wirkstoffs eingestellt oder gesteuert, insbesondere bei einer Temperaturänderung und/oder Änderung der Schadstoffmenge oder -konzentration angepasst.

Vorzugsweise wird der Zufluss des Druckgases 7 über einen Druck des Druckgases 7 eingestellt und/oder kontrolliert.

Vorzugsweise kann die Einstellung der Ventile 10 für jede Versorgungsleitung 8, jede Zuleitung 9, jede Ebene E, jede Düsenlanze 2 und/oder jede Düsenlanzengruppe separat, einzeln und/oder unabhängig von den anderen Versorgungsleitungen 8, Zuleitungen 9, Ebenen E, Düsenlanzen 2 und/oder Düsenlanzengruppen erfolgen.

Vorzugsweise ist die Verbrennungsanlage 1 bzw. das Steuerungssystem 24 dazu ausgebildet, ein Verfahren zur Abgasbehandlung mit obigen Merkmalen durchzuführen.

### Bezugszeichenliste:

- 1: Verbrennungsanlage
- 2: Düsenlanze
- 3: Abgasraum
- 4: Tank
- 5: Wirkfluid
- 6: Zumischfluid
- 7: Druckgas
- 8: Versorgungsleitung
- 8A: Versorgungsleitung für das Wirkfluid
- 8B: Versorgungsleitung für das Zumischfluid
- 8C: Versorgungsleitung für das Druckgas
- 9: Zuleitung
- 9A: Zuleitung für das Wirkfluid
- 9B: Zuleitung für das Zumischfluid
- 9C: Zuleitung für das Druckgas
- 10: Ventil
- 10A: erstes Ventil
- 10B: zweites Ventil
- 10C: drittes Ventil
- 11: Wand
- 12: Düsenkopf
- 13: Düse
- 13A: Düsenöffnung
- 14: Zumischbereich
- 15: Zumischteil
- 15A: Kanal
- 16: Rohr
- 16A: Rohr für das Wirkfluid
- 16B: Rohr für das Zumischfluid

- 16C: Rohr für das Druckgas
- 17A: Öffnungen
- 17B: Öffnungen
- 17C: Mischöffnungen
- 18: Verdüsungsbereich
- 18A: Zuführung
- 19: Halteteil
- 20: Verbindungsteil
- 21: Messeinrichtung
- 22: Messeinrichtung
- 23: Thermometer
- 24: Steuerungssystem
- 25: Verwirbelungsbereich

- A: Abgas
- B: Bereich
- C: Konzentration
- C1: (erste) Konzentration
- C2: (zweite) Konzentration
- C3: (dritte) Konzentration
- E: Ebene
- L: Längsachse
- S: Spray
- SB: Sprühbereich
- T: Temperatur
- T1: (erste) Temperatur
- T2: (zweite) Temperatur
- T3: (dritte) Temperatur
- TB1: (erster) Temperaturbereich
- TB2: (zweiter) Temperaturbereich
- TB3: (dritter) Temperaturbereich

## Patentansprüche

1. Verfahren zur Rauchgasentstickung in einer Verbrennungsanlage (1), wobei Stickoxide NOₓ aus dem Abgas (A) der Verbrennungsanlage (1) entfernt werden, wobei ein Fluidgemisch aus einem Zumischfluid (6) und einem Wirkfluid (5) mit einem Wirkstoff, der Ammoniak oder Harnstoff ist oder enthält, mittels Druckgas (7) durch mehrere Düsen oder Düsenlanzen (2) in einen gemeinsamen Abgasraum (3) der Verbrennungsanlage (1) eingedüst wird,
wobei eine Temperatur (T) in dem Abgasraum (3) gemessen wird und eine Menge oder Konzentration (C) des Wirkstoffs in dem verdüsten Fluidgemisch in Abhängigkeit von der gemessenen Temperatur (T) eingestellt oder gesteuert wird,
**dadurch gekennzeichnet,**
**dass** bei steigender Temperatur (T) die Menge oder Konzentration (C) des Wirkstoffs in einem ersten Temperaturbereich zwischen etwa 800 °C und etwa 980 °C erhöht und in einem zweiten Temperaturbereich zwischen etwa 980 °C und etwa 1040 °C zumindest im Wesentlichen konstant gehalten wird.

2. Verfahren nach einem der voranstehenden Ansprüche, **dadurch gekennzeichnet, dass** bei Erreichen oder Überschreiten einer Grenztemperatur die Menge oder Konzentration (C) des eingedüsten Wirkstoffs reduziert wird oder kein Wirkstoff eingedüst wird, wobei die Grenztemperatur mindestens etwa 1040 °C beträgt.

3. Verfahren nach einem der voranstehenden Ansprüche, **dadurch gekennzeichnet, dass** die Gesamtmenge der den Düsen oder Düsenlanzen (2) zugeführten Fluide bzw. der Volumenstrom des verdüsten Fluidgemischs unabhängig von dem Mischungsverhältnis zwischen Zumischfluid (6) und Wirkfluid (5) bzw. unabhängig von der Menge oder Konzentration (C) des Wirkstoffs und/oder unabhängig von der gemessenen Temperatur (T) zumindest im Wesentlichen konstant gehalten wird.

4. Verfahren nach einem der voranstehenden Ansprüche, **dadurch gekennzeichnet, dass** bei einer Temperaturänderung die Menge oder Konzentration (C) des Wirkstoffs in dem verdüsten Fluidgemisch angepasst oder verändert wird, wobei die Totzeit zur Anpassung der Menge oder Konzentration (C) des Wirkstoffs in dem verdüsten Fluidgemisch weniger als 5 s, vorzugsweise weniger als 1 s, insbesondere weniger als 0,1 s, besonders bevorzugt weniger als 0,01 s, beträgt, wobei die Totzeit der zeitliche Abstand zwischen der Messung der Temperaturänderung und dem Zeitpunkt ist, zu dem sich die Konzentration (C) oder Menge des Wirkstoffs in dem verdüsten bzw. in den Abgasraum (3) abgegebenen Fluidgemisch verändert.

5. Verfahren nach einem der voranstehenden Ansprüche, **dadurch gekennzeichnet, dass** die Temperatur (T) und/oder eine Schadstoffmenge oder Schadstoffkonzentration in verschiedenen Bereichen (B) separat voneinander gemessen wird, vorzugsweise in verschiedenen Ebenen (E) und/oder in verschiedenen Abschnitten oder Sektoren insbesondere einer Ebene (E).

6. Verfahren nach einem der voranstehenden Ansprüche, **dadurch gekennzeichnet, dass** die Menge oder Konzentration (C) des Wirkstoffs in dem verdüsten Fluidgemisch separat für jeden Bereich (B), jede Ebene (E), jeden Sektor und/oder jede Düsenlanze (2) eingestellt wird.

7. Verfahren nach einem der voranstehenden Ansprüche, **dadurch gekennzeichnet, dass** das Wirkfluid (5) und das Zumischfluid (6) unter Bildung eines flüssigen Fluidgemischs und/oder innerhalb der Düsenlanzen (2) miteinander gemischt werden, vorzugsweise unmittelbar vor der Verdüsung bzw. Eindüsung.

8. Verfahren nach einem der voranstehenden Ansprüche, **dadurch gekennzeichnet, dass** zunächst das Wirkfluid (5) und das Zumischfluid (6) miteinander vermischt werden und erst danach das Druckgas (7) dazugegeben wird und/oder dass das Druckgas (7) dem Wirkfluid (5) und/oder dem Zumischfluid (6) innerhalb der Düsenlanze (2) und/oder vor bzw. zu der Verdüsung zugegeben wird.

9. Verfahren nach einem der voranstehenden Ansprüche, **dadurch gekennzeichnet, dass** das Zumischfluid (6) Wasser ist oder enthält.

10. Verfahren nach einem der voranstehenden Ansprüche, **dadurch gekennzeichnet, dass** die Stickoxide NO und/oder NO₂ aus dem Abgas (A) der Verbrennungsanlage (1) entfernt werden.

11. Verfahren nach einem der voranstehenden Ansprüche, **dadurch gekennzeichnet, dass** das Fluidgemisch mit dem Wirkfluid (5) bzw. Wirkstoff in verschiedenen Bereichen (B) und/oder Ebenen (E) in den Abgasraum (3) über mehrere Düsen (13) bzw. Düsenlanzen (2) eingedüst wird, wobei die Menge oder Konzentration (C) des Wirkstoffs im Fluidgemisch einzelner oder Gruppen von Düsen (13) oder Düsenlanzen (2) individuell eingestellt, angepasst oder variiert wird, insbesondere in Abhängigkeit von der Temperatur (T) in dem jeweiligen Bereich (B) und/oder der jeweiligen Ebene (E).

## Claims

1. Method for flue gas denitrification in an incineration plant (1), wherein nitrogen oxides NOₓ are removed from the waste gas (A) of the incineration plant (1), wherein a fluid mixture of an admixed fluid (6) and an active fluid (5) comprising an active agent, which is or contains ammonia or urea, is injected by means of compressed gas (7) through a plurality of nozzles or nozzle lances (2) into a common waste gas chamber (3) of the incineration plant (1),
wherein a temperature (T) in the waste gas chamber (3) is measured and an amount or concentration (C) of the active agent in the atomized fluid mixture is set or controlled depending on the measured temperature (T),
**characterized in that**
as the temperature (T) increases, the amount or concentration (C) of the active agent is increased in a first temperature range between approximately 800 °C and approximately 980 °C, and is kept at least substantially constant in a second temperature range between approximately 980 °C and approximately 1040 °C.

2. Method according to any of the preceding claims, **characterized in that**, when a threshold temperature is reached or exceeded, the amount or concentration (C) of the injected active agent is reduced, or no active agent is injected, wherein the threshold temperature is at least approximately 1040 °C.

3. Method according to any of the preceding claims, **characterized in that** the total amount of the fluids supplied to the nozzles or nozzle lances (2), or the volume flow of the atomized fluid mixture, is kept at least substantially constant irrespective of the mixing ratio between the admixed fluid (6) and the active fluid (5), or irrespective of the amount or concentration (C) of the active agent, and/or irrespective of the measured temperature (T).

4. Method according to any of the preceding claims, **characterized in that**, in the event of a temperature change, the amount or concentration (C) of the active agent in the atomized fluid mixture is adjusted or changed, wherein the time delay for adjusting the amount or concentration (C) of the active agent in the atomized fluid mixture is less than 5 s, preferably less than 1 s, in particular less than 0.1 s, particularly preferably less than 0.01 s, wherein the time delay is the temporal spacing between the measurement of the temperature change and the point in time at which the concentration (C) or amount of the active agent in the fluid mixture that is atomized or is discharged into the waste gas chamber (3) changes.

5. Method according to any of the preceding claims, **characterized in that** the temperature (T) and/or a pollutant amount or pollutant concentration in different regions (B) is measured separately from one another, preferably in different planes (E) and/or in different portions or sectors in particular of one plane (E).

6. Method according to any of the preceding claims, **characterized in that** the amount or concentration (C) of the active agent in the atomized fluid mixture is set separately for each region (B), each plane (E), each sector and/or each nozzle lance (2).

7. Method according to any of the preceding claims, **characterized in that** the active fluid (5) and the admixed fluid (6) are mixed together, forming a liquid fluid mixture and/or inside the nozzle lances (2), preferably immediately before the atomization or injection.

8. Method according to any of the preceding claims, **characterized in that** initially the active fluid (5) and the admixed fluid (6) are mixed together and only subsequently the compressed gas (7) is added, and/or **in that** the compressed gas (7) is added to the active fluid (5) and/or the admixed fluid (6) inside the nozzle lance (2) and/or before or at the time of the atomization.

9. Method according to any of the preceding claims, **characterized in that** the admixed fluid (6) is or contains water.

10. Method according to any of the preceding claims, **characterized in that** the nitrogen oxides NO and/or NO₂ are removed from the waste gas (A) of the incineration plant (1).

11. Method according to any of the preceding claims, **characterized in that** the fluid mixture comprising the active fluid (5) or active agent is injected into the waste gas chamber (3) in different regions (B) and/or planes (E) via a plurality of nozzles (13) or nozzle lances (2), wherein the amount or concentration (C) of the active agent in the fluid mixture of individual or groups of nozzles (13) or nozzle lances (2) is set, adjusted or varied individually, in particular depending on the temperature (T) in the respective region (B) and/or the respective plane (E).

## Revendications

1. Procédé de dénitrification de gaz de fumée dans une installation de combustion (1), dans lequel des oxydes d'azote NOₓ sont éliminés des gaz d'échappement (A) de l'installation de combustion (1), dans lequel un mélange de fluides composé d'un fluide d'apport (6) et d'un fluide actif (5) avec un principe actif, qui est ou contient de l'ammoniaque ou de l'urée, est injecté dans une chambre de gaz d'échappement (3) commune de l'installation de combustion (1) par plusieurs buses ou lances à buse (2) au moyen de gaz comprimé (7),
dans lequel une température (T) est mesurée dans la chambre de gaz d'échappement (3) et une quantité ou une concentration (C) du principe actif dans le mélange de fluides atomisé est réglée ou commandée en fonction de la température (T) mesurée,
**caractérisé en ce**
**qu'**en cas de hausse de la température (T), la quantité ou la concentration (C) du principe actif est augmentée dans une première plage de températures entre environ 800 °C et environ 980 °C et est maintenue au moins sensiblement constante dans une deuxième plage de températures entre environ 980 °C et environ 1040 °C.

2. Procédé selon l'une quelconque des revendications précédentes, **caractérisé en ce qu'**en cas d'atteinte ou de dépassement d'une température limite, la quantité ou la concentration (C) du principe actif injecté est réduite ou aucun principe actif n'est injecté, dans lequel la température limite est d'au moins environ 1040 °C.

3. Procédé selon l'une quelconque des revendications précédentes, **caractérisé en ce que** la quantité totale des fluides amenés aux buses ou aux lances à buse (2) ou le débit volumique du mélange de fluides atomisé est maintenu(e) au moins sensiblement constant(e) indépendamment du rapport de mélange entre le fluide d'apport (6) et le fluide actif (5) ou indépendamment de la quantité ou de la concentration (C) du principe actif et/ou indépendamment de la température (T) mesurée.

4. Procédé selon l'une quelconque des revendications précédentes, **caractérisé en ce que** dans le cas d'une modification de température, la quantité ou la concentration (C) du principe actif dans le mélange de fluides atomisé est adaptée ou modifiée, dans lequel le temps mort pour adapter la quantité ou la concentration (C) du principe actif dans le mélange de fluides atomisé est inférieur à 5 s, de préférence est inférieur à 1 s, en particulier est inférieur à 0,1 s, de manière particulièrement préférée est inférieur à 0,01 s, dans lequel le temps mort est l'espacement dans le temps entre la mesure de la modification de température et le moment auquel la concentration (C) ou la quantité du principe actif dans le mélange de fluides atomisé ou distribué dans la chambre de gaz d'échappement (3) varie.

5. Procédé selon l'une quelconque des revendications précédentes, **caractérisé en ce que** la température (T) et/ou une quantité de polluants ou une concentration de polluants sont mesurées séparément les unes des autres dans des zones (B) différentes, de préférence à des niveaux (E) différents et/ou dans des tronçons ou secteurs différents en particulier d'un niveau (E).

6. Procédé selon l'une quelconque des revendications précédentes, **caractérisé en ce que** la quantité ou la concentration (C) du principe actif dans le mélange de fluides atomisé est réglée séparément pour chaque zone (B), chaque niveau (E), chaque secteur et/ou chaque lance à buse (2).

7. Procédé selon l'une quelconque des revendications précédentes, **caractérisé en ce que** le fluide actif (5) et le fluide d'apport (6) sont mélangés l'un à l'autre en formant un mélange de fluides liquide et/ou à l'intérieur des lances à buse (2), de préférence directement avant l'atomisation ou l'injection.

8. Procédé selon l'une quelconque des revendications précédentes, **caractérisé en ce que** d'abord le fluide actif (5) et le fluide d'apport (6) sont mélangés l'un à l'autre et puis le gaz comprimé (7) est ajouté, et/ou que le gaz comprimé (7) est ajouté au fluide actif (5) et/ou au fluide d'apport (6) à l'intérieur de la lance à buse (2) et/ou avant ou au moment de l'atomisation.

9. Procédé selon l'une quelconque des revendications précédentes, **caractérisé en ce que** le fluide d'apport (6) est ou contient de l'eau.

10. Procédé selon l'une quelconque des revendications précédentes, **caractérisé en ce que** les oxydes d'azote NO et/ou NO₂ sont éliminés des gaz d'échappement (A) de l'installation de combustion (1).

11. Procédé selon l'une quelconque des revendications précédentes, **caractérisé en ce que** le mélange de fluides est injecté avec le fluide actif (5) ou le principe actif dans des zones (B) et/ou des niveaux (E) différents dans la chambre de gaz d'échappement (3) par l'intermédiaire de plusieurs buses (13) ou lances à buse (2), dans lequel la quantité ou la concentration (C) du principe actif dans le mélange de fluides de diverses ou groupes de buses (13) ou lances à buse (2) est réglée, adaptée ou variée individuellement, en particulier en fonction de la température (T) dans la zone (B) respective et/ou dans le niveau (E) respectif.
